# EUROPÄISCHE PATENTSCHRIFT

(11) **EP 3 924 252 B1**
(45) Veröffentlichungstag und Bekanntmachung des Hinweises auf die Patenterteilung: **02.08.2023**
(21) Anmeldenummer: 20706174.8
(22) Anmeldetag: 14.02.2020
(51) Int. Cl.: B64D 11/06

(54) **FLUGZEUGSITZVORRICHTUNG**
AIRCRAFT SEAT DEVICE
DISPOSITIF DE SIÈGE POUR AÉRONEF

(30) Priorität: 14.02.2019 DE 102019103813
(43) Veröffentlichungstag der Anmeldung: 22.12.2021
(73) Patentinhaber: Recaro Aircraft Seating GmbH & Co. KG, 74523 Schwäbisch Hall (DE)
(72) Erfinder: BENDELE, Philipp, 74523 Schwäbisch Hall (DE); FRITZ, Michael, 74538 Rosengarten (DE); IVANOV, Pavel, 74248 Ellhofen (DE)
(74) Vertreter: Daub, Thomas
(86) Internationale Anmeldenummer: PCT/EP2020/053971
(87) Internationale Veröffentlichungsnummer: WO 2020/165441

(56) Entgegenhaltungen:
- EP-A2- 0 980 826
- WO-A1-2008/031506

## Beschreibung

### Stand der Technik

Die Erfindung betrifft eine Flugzeugsitzvorrichtung entsprechend des Patentanspruchs 1. Es sind bereits Flugzeugsitzvorrichtungen mit einem Umhausungselement und einer daran angebundenen Tischeinheit vorgeschlagen worden. Dokument WO2008031506 offenbart eine Sitzvorrichtung, insbesondere eine Flugzeugsitzvorrichtung mit einer ersten Sitzkomponente und einer zweiten Sitzkomponente, die insbesondere zur Beinauflage vorgesehen ist, und einer Tragevorrichtung mit einem bewegbar gelagerten Tragemittel. Das Tragemittel ist außerhalb der ersten Sitzkomponente gelagert. Dokument EP0980826 offenbart ein Flugzeugsitz mit einer offenen Außenschale, die einen Sitzabschnitt, eine Sitzlehne, eine Kopfstütze und eine Fußstütze umfasst, wenn sich der Sitz in einer aufrechten Position befindet. Der Sitz ist in eine Bettkonfiguration neigbar, so dass der Sitzabschnitt nach vorne aus dem offenen Ende der Schale bewegt wird.

Die Aufgabe der Erfindung besteht insbesondere darin, eine gattungsgemäße Vorrichtung mit verbesserten Eigenschaften hinsichtlich eines Komforts, eines Platzbedarfs in einer Verstaustellung und einer besonders vorteilhaften und intuitiven Bedienung durch einen Passagier bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Erfindungsgemäß wird eine Flugzeugsitzvorrichtung, mit wenigstens einem Umhausungselement mit wenigstens einer Tischeinheit, mit wenigstens einer Lagervorrichtung, die dazu vorgesehen ist, die wenigstens eine Tischeinheit wenigstens in einer Verstaustellung schräg an dem Umhausungselement anzubinden, wobei die Lagervorrichtung wenigstens eine Rotationslagereinheit aufweist, die dazu vorgesehen ist, die Tischeinheit zwischen der Verstaustellung und wenigstens einer im Wesentlichen in einer Horizontalebene liegenden Zwischenstellung zu verschwenken, wobei die Lagervorrichtung zumindest eine Linearlagereinheit umfasst, die dazu vorgesehen ist, die Tischeinheit zwischen der Zwischenstellung und zumindest einer komplett ausgefahrenen, sitznahen Gebrauchsstellung linear zu verfahren, vorgeschlagen. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einer "Flugzeugsitzvorrichtung" soll insbesondere eine Vorrichtung verstanden werden, die zumindest einen Teil eines Flugzeugsitzmoduls ausbildet. Unter einem "Flugzeugsitzmodul" soll insbesondere ein Modul verstanden werden, das einen Fluggastsitzbereich definiert und dazu wenigstens ein Umhausungselement, das den Fluggastsitzbereich zumindest teilweise von einem restlichen Kabinenbereich abtrennt, zumindest einen in dem Fluggastsitzbereich angeordneten Flugzeugsitz und weitere Elemente des Fluggastsitzbereiches umfasst, wie insbesondere eine Konsole, einen Ottomanen und/oder eine Bildschirmeinheit. Der Flugzeugsitz ist dabei vorzugsweise als ein Einzelsitz ausgebildet. Unter einem "Fluggastsitzbereich" soll insbesondere ein Bereich verstanden werden, in dem zumindest ein Flugzeugsitz, vorzugsweise ein als ein Einzelsitz ausgebildeter Flugzeugsitz, oder eine aus zumindest zwei Flugzeugsitzen gebildete Sitzeinheit angeordnet ist und der zum Aufenthalt wenigstens eines Passagiers während eines Fluges in einem Flugzeug vorgesehen ist. In einem Sitzbereich sind vorzugsweise weitere Elemente angeordnet, die von einem Passagier nutzbar sind, wie insbesondere eine Konsole, ein Ottoman, Verstaumöglichkeiten, Ablageelemente und/oder Entertainmentvorrichtungen. Der Fluggastsitzbereich ist insbesondere als ein Teilbereich einer Kabine, insbesondere einer Flugzeugkabine, ausgebildet. Unter einem "Umhausungselement" soll insbesondere ein Element verstanden werden, das zumindest einen Teil eines Flugzeugsitzbereiches, vorzugsweise insbesondere einen Fußraum des Flugzeugsitzbereiches zumindest teilweise umschließt. Das Umhausungselement ist vorzugsweise als ein Shellelement vorzugsweise aus einem Composite-Material oder einem Leichtmetall gebildet. Grundsätzlich ist es auch denkbar, dass das Umhausungselement zumindest teilweise von einem Kunststoff gebildet ist. Das Umhausungselement bildet vorzugsweise einen Teil eines zweiten, benachbart und/oder vor dem Flugzeugsitzmodul angeordneten Flugzeugsitzmoduls aus. Das Umhausungselement bildet vorzugsweise insbesondere zumindest einen Teil einer Konsole des vorderen Flugzeugmoduls aus. Vorzugsweise ist es ebenfalls denkbar, dass in einem Bereich zwischen dem Ottoman und einem Monitor ein Ablagefach in das Umhausungselement eingebracht ist. Vorzugsweise ist das Ablagefach in einer oberen Wandung des Umhausungselements eingebracht. Vorteilhaft verläuft das Ablagefach schräg, insbesondere schräg nach unten, sodass verstaute Gegenstände vorteilhaft in dem Ablagefach angeordnet werden könne. Vorteilhaft verläuft das schräge Ablagefach insbesondere parallel zu der schrägen Unterseite der oberen Wandung des Umhausungselements. Grundsätzlich ist es auch denkbar, dass das Umhausungselement, insbesondere im Fall eines in einer Flugzeugskabine vordersten Flugzeugsitzbereichs als ein Teil einer Bordwand ausgebildet ist. Unter einer "Tischeinheit" soll insbesondere eine Einheit verstanden werden, die die zumindest in einer Gebrauchsstellung eine Tischauflagefläche ausbildet, auf die ein Benutzer, insbesondere ein Fluggast Gegenstände ablegen kann. Die Tischeinheit weist zur Ausbildung einer Tischauflagefläche vorzugsweise zumindest einen Tischgrundkörper auf, der zumindest in einer Stellung zumindest einen Teil der Tischauflagefläche ausbildet. Die Tischeinheit ist vorzugsweise in zumindest einer Verstaustellung, in zumindest einer Zwischenstellung und einer Gebrauchsstellung. Vorzugsweise ist die Tischeinheit aus zumindest zwei schwenkbar zueinander angeordneten Elementen, vorzugsweise einem Tischgrundkörper und einem Tischkörper gebildet. Unter einer "Verstaustellung" soll dabei insbesondere eine Stellung der Tischeinheit verstanden werden, in der die Tischeinheit nicht dazu vorgesehen ist, zur Ablage von Gegenständen benutzt zu werden. In der Verstaustellung ist die Tischeinheit vorzugsweise in einem Gehäuse eingefahren, vorzugsweise insbesondere in das Umhausungselement eingefahren, sodass es von einem Bewegungsbereich einer Person, die auf einem zugeordneten Flugzeugsitz sitzt, entfernt ist. Vorzugsweise ist die Tischeinheit in der Verstaustellung komplett in einem Gehäuse angeordnet, wobei eine Seite der Tischplatte das Gehäuse vorzugsweise abschließt. Die Tischeinheit ist in der Verstaustellung komplett in einem von dem Umhausungselement aufgespannten Raum, an einer oberen Wandung, die einen Fußbereich begrenzt, angeordnet.

Unter "schräg" soll insbesondere relativ zu einer Aufständerebene in einem Winkel, ungleich 0 Grad und ungleich 90 Grad verstanden werden. Vorzugsweise ist unter schräg insbesondere ein Winkel zu der Aufständerebene zu verstehen, der zwischen 10 Grad und 45 Grad liegt. Unter einer "Lagervorrichtung" soll insbesondere eine Vorrichtung verstanden werden, die zumindest eine Lagereinheit aufweist, die ein Element, wie insbesondere die Tischeinheit relativ zu einem weiteren Element, wie insbesondere dem Umhausungselement beweglich lagert. Die Lagervorrichtung kann vorzugsweise insbesondere dazu vorgesehen sein, das Element aus seiner Verstaustellung in zumindest einer Gebrauchsstellung zu verstellen. Insbesondere kann die Lagervorrichtung zur Verstellung der Tischeinheit dazu vorgesehen sein, die Tischeinheit zu verschwenken und linear zu verschieben. Vorzugsweise ist die Lagervorrichtung dazu vorgesehen, eine Verschwenkung und eine Linearverschiebung des Tisches separat voneinander auszuführen. Vorzugsweise kann mittels der Lagervorrichtung entweder die Verschwenkung oder die Linearverschiebung der Tischeinheit durchgeführt werden. Vorzugsweise ist eine zeitgleiche Verschwenkung und Linearverschiebung der Tischeinheit nicht möglich. Grundsätzlich ist es aber auch denkbar, dass in einer weiteren Ausführungsform die Lagervorrichtung dazu vorgesehen ist, die Tischeinheit zumindest teilweise gleichzeitig zu verschwenken und linear zu verschieben. Unter einer "Rotationslagereinheit" soll insbesondere eine Einheit verstanden werden, die ein Element, wie insbesondere die Tischeinheit relativ zu einem weiteren Element verschwenkbar lagert. Die Rotationlagereinheit lagert ein Element, insbesondere die Tischeinheit rotatorisch um zumindest eine Rotationsachse. Vorzugsweise ist das mittels der Rotationslagereinheit gelagerte Element, insbesondere die Tischeinheit um einen definierten Schwenkwinkel zwischen einer ersten Position und zumindest einer zweiten Position verschwenkbar. Grundsätzlich ist es auch denkbar, dass das zu schwenkende Element, insbesondere die Tischeinheit in mehr als zwei Positionen verschwenkbar ist. Vorzugsweise ist die Tischeinheit mittels der Rotationslagereinheit zumindest in einer Richtung, vorzugsweise in Richtung der Zwischenstellung, gedämpft gelagert. Unter einer "Horizontalebene" soll insbesondere eine Ebene verstanden werden, die im Wesentlichen horizontal ausgerichtet ist, also im Wesentlichen parallel zu einer Aufständerebene ausgerichtet ist. Unter einer "Zwischenstellung" soll insbesondere eine Stellung der Tischeinheit verstanden werden, die insbesondere zwischen einer Verstaustellung und einer vorderen Gebrauchsstellung angeordnet ist. Die Tischeinheit ist bei einer Verstellung zwischen der Verstaustellung und der Gebrauchsstellung zumindest kurzzeitig in der Zwischenstellung angeordnet. Die Zwischenstellung wird von der Tischeinheit bei einem Verfahren zwischen der Verstaustellung und der Gebrauchsstellung automatisch eingenommen. Vorteilhaft ist es grundsätzlich denkbar, dass zumindest ein Teil der Tischeinheit in der Zwischenstellung von einem Passagier genutzt werden kann, insbesondere beispielsweise als Ablage für Gegenstände, wie beispielsweise ein Smartphone, oder als ein Getränkehalter. Vorzugsweise ist die Tischeinheit in der Zwischenstellung verriegelbar. Durch eine Verriegelung der Tischeinheit in der Zwischenposition kann die Tischeinheit vorteilhaft auch in einer TTL Situation (Taxi, Takeoff, Landing) nutzbar sein. Unter einer Linearlagereinheit" soll insbesondere eine Lagereinheit verstanden werden, die dazu vorgesehen ist, ein Element, wie insbesondere die Tischeinheit zwischen zumindest zwei Positionen linear, insbesondere entlang einer Verschiebeachse zu verfahren. Eine Linearlagereinheit weist dazu zumindest eine ortsfeste Führungsschiene und ein darin verschiebbar gelagertes Führungselement auf. Unter einer "sitznahen Gebrauchsstellung" soll hier insbesondere eine Stellung der Tischeinheit verstanden werden, in der mittels der Lagervorrichtung maximal nach in Richtung eines Flugzeugsitzes des Flugzeugsitzbereichs verstellt ist. In der sitznahen Gebrauchsstellung ist die Tischeinheit vorzugsweise insbesondere zumindest teilweise oberhalb eines Sitzbereichs des Flugzeugsitzes des Flugzeugsitzbereichs angeordnet, dessen Teil die Tischeinheit ist. Durch eine erfindungsgemäße Ausgestaltung kann eine Flugzeugsitzvorrichtung bereitgestellt werden, die eine besonders vorteilhafte Tischeinheit aufweist, die insbesondere vorteilhaft und platzsparend verstaubar ist, besonders vorteilhaft und intuitiv von einer Verstaustellung in eine Gebrauchsstellung verstellt werden kann und eine besonders vorteilhafte Gebrauchsstellung und eine Zwischenstellung aufweist in der die Tischeinheit ebenfalls nutzbar ist. Vorteilhaft kann durch die erfindungsgemäße Ausgestaltung insbesondere ein Flugzeugsitzbereich bereitgestellt werden, der insbesondere in einer Liegeposition des Flugzeugsitzes im Bereich der verstauten Tischeinheit in einer Vertikalrichtung eine besonders vorteilhaft große Beinfreiheit aufweist, sodass einem Passagier eine besonders vorteilhaft großer Liegebereich bereitgestellt werden kann.

Ferner wird vorgeschlagen, dass die Linearlagereinheit eine Lagerachse ausbildet, die schräg zu einer Aufständerebene ausgerichtet ist. Unter einer "Lagerachse" soll insbesondere eine Achse verstanden werden, entlang der, die Tischeinheit zwischen zumindest zwei Stellungen verfahrbar ist. Die Lagerachse ist vorzugsweise von einer Geraden gebildet. Grundsätzlich ist es aber auch denkbar, dass die Lagerachse von einer Kurvenbahn gebildet ist. Unter einer "Aufständerebene" soll insbesondere eine Ebene verstanden werden, auf der eine Flugzeugsitzvorrichtung angebunden ist. Vorzugsweise ist die Aufständerebene insbesondere von einem Kabinenboden eines Flugzeugs ausgebildet, auf dem die Flugzeugsitzvorrichtung aufgeständert ist. Unter der Wendung, dass die Lagerachse "schräg zu einer Aufständerebene ausgerichtet ist" soll insbesondere verstanden werden, dass ein hinteres Ende der Lagerachse einen anderen, vorzugsweise einen größeren senkrechten Abstand zu der Aufständerebene aufweist als ein vorderes Ende der Lagerachse. Durch die schräg ausgerichtete Lagerachse wird die Tischeinheit bei einer Axialbewegung in Richtung eines Flugzeugsitzes vorteilhaft auch in einer Höhe verstellt, vorzugsweise abgesenkt. Die Lagerachse ist dabei vorzugsweise insbesondere um einen Winkel von 8 Grad nach hinten geneigt. Grundsätzlich ist es auch denkbar, dass die Lagerachse einen Winkel von 0 Grad bis 15 Grad mit der Aufständereinheit einschließt. Dadurch kann die Tischeinheit mittels der Linearlagereinheit besonders vorteilhaft gelagert werden.

Es wird weiterhin vorgeschlagen, dass die Lagervorrichtung wenigstens eine Verriegeleinheit aufweist, die die Tischeinheit in der Zwischenstellung verriegelt. Unter einer "Verriegeleinheit" soll insbesondere eine Einheit verstanden werden, die dazu vorgesehen ist, die Tischeinheit in einer definierten Stellung, vorzugsweise insbesondere der Zwischenstellung positionssicher zu verriegeln. Vorzugsweise ist die Verriegeleinheit dazu vorgesehen die Tischeinheit automatisch in der Zwischenstellung zu verriegeln. Die Verriegeleinheit ist vorzugsweise dazu vorgesehen, die Tischeinheit, wenn diese aus der Verstaustellung oder aus der Gebrauchsstellung in die Zwischenstellung verstellt wird selbsttätig zu verriegeln, sobald diese exakt in der Zwischenstellung angeordnet ist. Die Verriegeleinheit ist vorzugsweise insbesondere in einer Verriegelstellung dazu vorgesehen, die Tischeinheit in einer definierten Stellung, insbesondere der Zwischenstellung zu verriegeln. Die Verriegeleinheit ist vorzugsweise insbesondere dazu vorgesehen, selbsttätig die Verriegelstellung einzunehmen, sobald die Tischeinheit in der Zwischenstellung angeordnet ist. Die Verriegeleinheit ist vorzugsweise dazu vorgesehen, in einer Entriegelstellung die Tischeinheit zu entriegeln. Die Verriegeleinheit ist insbesondere dazu vorgesehen, die Tischeinheit in der Entriegelstellung frei zu geben. In der Entriegelstellung der Verriegeleinheit kann die Tischeinheit aus der Zwischenstellung herausbewegt werden. Vorzugsweise kann die Tischeinheit in der Entriegelstellung der Verriegeleinheit aus der Zwischenstellung in die Gebrauchsstellung und/oder in die Verstaustellung verstellt werden. Unter "verriegeln" soll insbesondere verstanden werden durch eine form- und oder kraftschlüssige Verbindung in einer definierten Stellung, insbesondere der Zwischenstellung, relativ zu einem Bezugselement ortsfest zu fixieren. Unter "entriegeln" soll insbesondere verstanden werden, dass eine form- und oder kraftschlüssige Verbindung, die zur Verriegelung der Tischeinheit in einer Stellung, insbesondere der Zwischenstellung vorgesehen ist, gelöst wird, sodass die Tischeinheit aus der Zwischenstellung herausbewegt werden kann. Dadurch kann die Tischeinheit besonders vorteilhaft in der Zwischenstellung fixiert und in dieser zumindest teilweise genutzt werden.

Des Weiteren wird vorgeschlagen, dass die Verriegeleinheit zumindest ein Betätigungselement aufweist, mittels der die Verriegeleinheit entriegelbar ist und das Tischelement aus der Zwischenstellung heraus bewegt werden kann. Unter einem "Betätigungselement" soll insbesondere ein Element verstanden werden, das durch einen Bediener, vorzugsweise einen Passagier, betätigbar, vorzugsweise händisch betätigbar ist, um die Verriegelungseinheit zu entriegeln, also von einer Verriegelstellung in einer Entriegelstellung zu schalten. Das Betätigungselement ist vorzugsweise als ein Betätigungshebel ausgebildet, der dazu vorgesehen ist, von einem Bediener verschwenkt zu werden. Grundsätzlich ist es auch denkbar, dass das Betätigungselement als ein Druckknopf, als ein elektrisches oder elektronisches Betätigungselement, oder als ein anderes dem Fachmann als sinnvoll erscheinendes Betätigungselement ausgebildet ist. Vorzugsweise ist es ebenso denkbar, dass das Betätigungselement als ein elektrisches oder elektronisches Bauteil, insbesondere als ein elektronischer Schalter, ausgebildet ist. Vorzugsweise ist es insbesondere auch denkbar, dass das Betätigungselement von einer Schaltfläche auf einem berührungssensitiven Schalter ausgebildet ist. Insbesondere ist es auch denkbar, dass das Betätigungselement als Teil eines Bedienclusters, insbesondere eines Bedienclusters auf einem Touchscreen, ausgebildet ist. Vorzugsweise ist es insbesondere denkbar, dass ein entsprechendes elektrisches oder elektronisches Bedienelement an einem Flugzeugsitz direkt angebunden ist. Vorzugsweise ist es ebenso denkbar, dass das Bedienelement von einer Bedienschaltfläche in einem auf einem Smartphone oder Tablet laufenden Betriebsprogramm ausgebildet ist, wobei das Smartphone oder Tablet vorzugsweise kabellos oder kabelgebunden mit dem Flugzeugsitz gekoppelt ist. Bei einer elektronischen Bedienung der Tischeinheit weist die Verriegeleinheit vorzugsweise einen elektronischen Sensor auf, der insbesondere erfasst, wenn die Tischeinheit vollständig in der Zwischenstellung angeordnet ist. Eine elektronische Entriegelung der Verriegeleinheit mittels eines elektronischen Betätigungselements wird vorzugsweise erst freigegeben, wenn mittels des Sensors ein Erreichen der Zwischenstellung der Tischeinheit sensiert wurde. Dadurch kann die Tischeinheit vorteilhaft einfach aus der Zwischenstellung herausbewegt werden.

Weiterhin wird vorgeschlagen, dass die Verriegeleinheit zumindest eine Sicherungseinheit aufweist, die ein Entriegeln verhindert, bis die Tischeinheit vollständig in der Zwischenstellung angeordnet ist. Unter einer "Sicherungseinheit" soll insbesondere eine Einheit verstanden werden, die ein Betätigen der Verriegeleinheit, insbesondere ein Verstellen der Verriegeleinheit von einem Verriegelzustand in einen Entriegelzustand verhindert, wenn die Tischeinheit nicht vollständig in der Zwischenstellung angeordnet ist. Dadurch kann eine fehlerhafte Bedienung der Tischeinheit vorteilhaft einfach verhindert werden und eine intuitive Bedienung der Tischeinheit erreicht werden.

Außerdem wird vorgeschlagen, dass die Tischeinheit von einem ersten Tischrundkörper und zumindest einem dazu in einer Querrichtung schwenkbar angeordneten Tischkörper ausgebildet ist. Unter einem "Tischgrundkörper" soll insbesondere ein Hauptkörper der Tischeinheit verstanden werden, der insbesondere direkt an die Lagervorrichtung angebunden ist. Der Tischgrundkörper ist vorzugsweise über die Lagervorrichtung mit dem Umhausungselement verbunden. Der Tischgrundköper bildet vorzugsweise einen größten Teil der Tischeinheit aus. Der Tischgrundkörper ist vorzugsweise von einer ebenen Platte gebildet. Der Tischgrundkörper kann beispielsweise aus einem Composite-Material oder einem Leichtmetall gebildet sein. Unter einem "Tischkörper" soll insbesondere ein Teil der Tischeinheit verstanden werden, der in zumindest einem Zustand dazu vorgesehen ist die von dem Tischgrundkörper bereitgestellte Tischfläche zu erweitern. In einer Gebrauchsstellung des Tischkörpers ist der Tischkörper dazu vorgesehen, den Tischgrundkörper zu erweitern und zusammen mit dem Tischgrundkörper die gesamte Tischauflagefläche der Tischeinheit auszubilden. Grundsätzlich ist es denkbar, dass der Tischgrundkörper und der damit verbundene Tischkörper im Wesentlichen gleich groß sind. Grundsätzlich ist es ebenso denkbar, dass der Tischkörper größer ausgebildet ist als der Tischgrundkörper oder umgekehrt. Der Tischkörper ist ein Teil der Tischeinheit. Insbesondere ist der Tischkörper von einer ebenen Platte gebildet. Vorzugsweise weist der Tischkörper eine gleiche Dicke und eine gleiche Tiefe auf wie der Tischgrundköper, sodass in einer Gebrauchsstellung des Tischkörpers der Tischkörper und der Tischgrundkörper eine einheitliche Tischeinheit ausbilden. Der Tischkörper ist dabei vorzugsweise mittels zumindest einem Scharnier schwenkbar mit dem Tischgrundkörper verbunden. Grundsätzlich wäre es auch denkbar, dass ein Tischkörper auf eine andere Weise verstellbar mit dem Tischgrundkörper verbunden ist, beispielsweise durch eine teleskopartige Linearverschiebung. Dadurch kann die Tischeinheit besonders vorteilhaft ausgebildet werden.

Es wird weiter vorgeschlagen, dass die Tischeinheit zumindest ein Anschlagelement aufweist, das in einem ausgeklappten Zustand der Tischeinheit dazu vorgesehen ist, ein Verschieben der Tischeinheit von einer Gebrauchsstellung in die Zwischenstellung zu verhindern. Unter einem "Anschlagelement" soll insbesondere ein Element verstanden werden, das in einer definierten Stellung an ein korrespondierend ausgebildetes Element anschlägt, um so eine Bewegung eines Elements, wie insbesondere eine Linearverschiebung der Tischeinheit in zumindest einem Betriebszustand auf einen maximalen Weg zu begrenzen. Das Anschlagselement ist vorzugsweise insbesondere von einem Teil der Tischeinheit, vorzugsweise insbesondere von einer Kante des Tischkörpers gebildet, der an den Tischgrundkörper verschwenkbar angebunden ist. Grundsätzlich ist es ebenso denkbar, dass das Anschlagselement von einem separaten Anschlagselement ausgebildet ist, das insbesondere dazu vorgesehen ist, in die Linearlagereinheit einzugreifen, um einen Verschiebeweg der Tischeinheit in ihrem ausgeklappten Zustand zu begrenzen. Dabei ist es insbesondere denkbar, dass das Anschlagselement durch eine in der Tischeinheit angeordnete Mechanik in einem ausgeklappten Zustand der Tischeinheit in die Verriegelstellung gebracht wird, in der das Anschlagselement in einer definierten Position der Linearlagereinheit an einem korrespondierend ausgebildeten Anschlagselement anschlägt, um einen Verfahrweg der Tischeinheit zu begrenzen, wodurch insbesondere eine Begrenzung des Verfahrwegs der Tischeinheit ohne direktes Anschlagen an das Umhausungselement erreicht werden kann. Dadurch kann vorteilhaft eine fehlerhafte Bedienung der Tischeinheit beim Verfahren in die Verstaustellung vorteilhaft vermieden werden.

Zudem wird vorgeschlagen, dass die Lagervorrichtung wenigstens ein Verriegelmodul aufweist, mittels dem die Tischeinheit in der Verstaustellung an dem Umhausungselement gesichert werden kann. Unter einem "Verriegelmodul" soll insbesondere ein Modul verstanden werden, das dazu vorgesehen ist, die Tischeinheit in einer definierten Stellung, vorzugsweise insbesondere in der Verstaustellung positionssicher zu verriegeln. Vorzugsweise ist das Verriegelmodul dazu vorgesehen die Tischeinheit automatisch in der Zwischenstellung zu verriegeln. Das Verriegelmodul ist vorzugsweise dazu vorgesehen, die Tischeinheit, wenn diese in die Verstaustellung verstellt wird selbsttätig zu verriegeln, sobald diese exakt in der Verstaustellung angeordnet ist. Das Verriegelmodul ist vorzugsweise insbesondere in einer Verriegelstellung dazu vorgesehen, die Tischeinheit in einer definierten Stellung, insbesondere der Verstaustellung zu verriegeln. Das Verriegelmodul ist vorzugsweise insbesondere dazu vorgesehen, selbsttätig die Verriegelstellung einzunehmen, sobald die Tischeinheit in der Verstaustellung angeordnet ist. Das Verriegelmodul ist vorzugsweise dazu vorgesehen, in einer Entriegelstellung die Tischeinheit zu entriegeln. Das Verriegelmodul ist insbesondere dazu vorgesehen, die Tischeinheit in der Entriegelstellung frei zu geben. In der Entriegelstellung des Verriegelmoduls kann die Tischeinheit aus der Verstaustellung herausbewegt werden. Vorzugsweise kann die Tischeinheit in der Entriegelstellung des Verriegelmoduls aus der Verstaustellung heraus in die Zwischenstellung bewegt werden. Unter "gesichert" soll insbesondere verstanden werden durch eine form- und oder kraftschlüssige Verbindung in einer definierten Stellung, insbesondere der Verstaustellung, relativ zu einem Bezugselement ortsfest zu fixieren. Unter "entriegeln" soll insbesondere verstanden werden, dass eine form- und oder kraftschlüssige Verbindung, die zur Verriegelung der Tischeinheit in einer Stellung, insbesondere der Verstaustellung vorgesehen ist, gelöst wird, sodass die Tischeinheit aus der Verstaustellung herausbewegt werden kann. Dadurch kann die Tischeinheit besonders vorteilhaft verstaut werden.

Weiter wird vorgeschlagen, dass das Verriegelmodul zumindest ein Sicherungselement aufweist, das zur Sicherung der Tischeinheit dazu vorgesehen ist, seitlich in die Tischeinheit formschlüssig einzugreifen. Unter einem "Sicherungselement" soll insbesondere ein Form- und/oder Kraftschlusselement verstanden werden, das die Tischeinheit in einem verriegelten Zustand form- und/oder kraftschlüssig an einem zu befestigenden Element, wie insbesondere dem Umhausungselement befestigt. Das Sicherungselement ist vorzugsweise als ein Formschlusselement, insbesondere als ein beweglich gelagerter Verriegelungspin ausgebildet. Das als Verriegelungspin ausgebildete Sicherungselement ist vorzugsweise insbesondere beweglich in dem Umhausungselement angeordnet und greift in einem verriegelten Zustand in die Tischeinheit ein. Dadurch kann das Verriegelmodul besonders einfach ausgebildet werden.

Ferner wird vorgeschlagen, dass das Verriegelmodul wenigstens ein Betätigungsmittel aufweist, das zur Betätigung des Verriegelmoduls vorgesehen ist, das zumindest im Wesentlichen seitlich neben der Tischeinheit an dem Umhausungselement angebunden ist. Unter einem "Betätigungsmittel" soll insbesondere ein Element verstanden werden, das von einem Bediener, insbesondere einem Passagier vorzugsweise händisch betätigbar ist, um das Verriegelmodul zu entriegeln, also von einer Verriegelstellung in eine Entriegelstellung zu schalten. Das Betätigungsmittel ist vorzugsweise als ein Betätigungshebel ausgebildet, der dazu vorgesehen ist, von einem Bediener verschwenkt zu werden. Grundsätzlich ist es auch denkbar, dass das Betätigungsmittel als ein Druckknopf, als ein elektrisches oder elektronisches Betätigungselement, oder als ein anderes dem Fachmann als sinnvoll erscheinendes Betätigungselement ausgebildet ist. Vorzugsweise ist es ebenso denkbar, dass das Betätigungsmittel, wie das Betätigungselement der Verriegeleinheit, als ein elektrisches oder elektronisches Bauteil, insbesondere als ein elektronischer Schalter, ausgebildet ist. Grundsätzlich ist es ebenso denkbar, dass das Betätigungsmittel des Verriegelmoduls und das Betätigungselement der Verriegeleinheit einstückig ausgebildet sind. Vorzugsweise kann das einstückig ausgebildete Betätigungsmittel als ein mechanischer oder als ein elektrisches/elektronisches Betätigungselement ausgebildet sein. Dadurch kann die Tischeinheit besonders einfach von seiner Verstaustellung gelöst werden.

Es wird weiterhin vorgeschlagen, dass die Linearlagereinheit wenigstens zwei parallel verlaufende, in einer seitlichen Seitenwand der Umhausungseinheit angeordnete Führungsschienen aufweist. Unter einer "Führungsschiene" soll insbesondere ein Linearführungselement verstanden werden, das dazu vorgesehen ist, eine Lagerbahn, vorzugsweise eine gerade Lagerachse auszubilden, entlang der ein weiteres Element linear auf der Führungsschiene verschiebbar ist. Eine Führungsschiene ist dazu vorgesehen, dass ein Führungselement form- und/oder kraftschlüssig auf ihr angebunden ist, wobei das Führungselement zumindest in einer Achse, insbesondere entlang der Lagerachse einen Freiheitsgrad relativ zu der Führungsschiene aufweist. Vorzugsweise ist es grundsätzlich ebenso denkbar, dass eine der zumindest zwei Führungsschienen der Linearlagereinheit in einer gegenüberliegenden zweiten Seitenwand oder in einer oberen Wandung des Umhausungselements angebracht ist. Dadurch kann die Linearlagereinheit besonders vorteilhaft ausgebildet werden.

Des Weiteren wird vorgeschlagen, dass die Lagervorrichtung wenigstens einen Lagerarm aufweist, der mittels der Linearlagereinheit linear verschiebbar ist und an die die Tischeinheit über die Rotationslagereinheit schwenkbar angebunden ist. Dadurch kann die Tischeinheit besonders vorteilhaft an das Umhausungselement angebunden werden.

Weiterhin wird vorgeschlagen, dass die Lagervorrichtung eine Gebrauchsstellungssicherungseinheit aufweist, die dazu vorgesehen ist, die Tischeinheit in der Gebrauchsstellung zu sichern, sofern die Tischeinheit nicht in der Zwischenstellung angeordnet ist. Unter einer "Gebrauchsstellungsicherungseinheit" soll insbesondere eine Einheit verstanden werden, die den Tisch durch eine form- und/oder kraftschlüssige Verbindung in zumindest einem Zustand relativ zu einem weiteren Element, wie insbesondere dem Lagerarm, an dem die Tischeinheit verschwenkbar angeordnet ist, fixiert. Die Gebrauchsstellungsicherungseinheit ist insbesondere dazu vorgesehen, die Tischeinheit in einer im Wesentlichen horizontalen Ausrichtung in der Gebrauchsstellung zu sichern. Dadurch kann vorteilhaft verhindert werden, dass die Tischeinheit während des Gebrauchs, beispielsweise durch ungewolltes Stoßen mit einem Fuß nach oben aus der Gebrauchsstellung herausgeschwenkt werden kann.

Außerdem wird vorgeschlagen, dass der Lagerarm in einem hinter dem Tisch angeordneten Bereich ein Zusatzelement ausbildet. Unter einem "Zusatzelement" soll insbesondere ein Element verstanden werden, dass insbesondere eine Zusatzfunktion für einen Passagier bereitstellt. Ein Zusatzelement ist vorzugsweise als ein zusätzliches Tischelement, als ein Halter für elektronische Geräte, wie insbesondere ein Smartphone oder ein Tablet, oder als eine Aufbewahrungsbox ausgebildet. Dadurch kann der Lagerarm besonders vorteilhaft zusätzlich genutzt werden.

Es wird weiter vorgeschlagen, dass der Lagerarm zumindest eine Abstützfläche ausbildet, über die sich die Tischeinheit in der Gebrauchsstellung zumindest teilweise abstützt. Unter einer "Abstützfläche" soll insbesondere eine Fläche verstanden werden, über die Kräfte, die auf die Tischeinheit wirken, insbesondere Gewichtskräfte von auf der Tischeinheit befindlichen Gegenständen, oder Abstützkräfte einer Person, in den Lagerarm eingeleitet werden. Dadurch können auf die Tischeinheit wirkende Kräfte besonders einfach in den Lagerarm eingeleitet werden und beispielsweise eine Rotationslagereinheit über die die Tischeinheit schwenkbar an den Lagerarm angebunden ist, vorteilhaft klein und leicht ausgebildet werden.

Die erfindungsgemäße Flugzeugsitzvorrichtung soll hierbei nicht auf die oben beschriebene Anwendung und Ausführungsform beschränkt sein. Insbesondere kann die erfindungsgemäße Flugzeugsitzvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer erfindungsgemäßen Flugzeugsitzvorrichtung mit einem Umhausungselement und einer daran gelagerten Tischeinheit in einer Verstaustellung in einem ersten Ausführungsbeispiel,
- Fig. 2: eine schematische Darstellung der Flugzeugsitzvorrichtung mit der Tischeinheit in einer Zwischenstellung,
- Fig. 3: eine schematische Darstellung der Flugzeugsitzvorrichtung mit der Tischeinheit in einer teilweise ausgefahrenen Stellung in einem eingeklappten Zustand der Tischeinheit,
- Fig. 4: eine schematische Darstellung der Flugzeugsitzvorrichtung mit der Tischeinheit in einer sitznahen Gebrauchsstellung,
- Fig. 5: eine schematische Darstellung der Tischeinheit mit einer Lagervorrichtung, die die Tischeinheit beweglich lagert,
- Fig. 6: eine schematische Teilansicht der Tischeinheit mit einem Teil eines Lagerarms, der eine Abstützfläche ausbildet,
- Fig. 7: eine schematische Ansicht einer Verriegeleinheit zur Verriegelung der Tischeinheit in einer Zwischenstellung,
- Fig. 8: eine schematische Ansicht eines Zusatzelements, das auf dem Lagerarm angeordnet ist,
- Fig. 9: eine schematische Teilansicht der Tischeinheit mit einer Höhenverstellvorrichtung,
- Fig. 10: eine schematische Teilansicht der Tischeinheit in einem mittels der Höhenverstellvorrichtung nach oben verstellten Zustand,
- Fig. 11: eine schematische Darstellung einer erfindungsgemäßen Flugzeugsitzvorrichtung mit einem Umhausungselement und einer daran gelagerten Tischeinheit in einer Verstaustellung in einem zweiten Ausführungsbeispiel und
- Fig. 12: eine schematische Ansicht der Tischeinheit in einer Gebrauchsstellung.

### Beschreibung der Ausführungsbeispiele

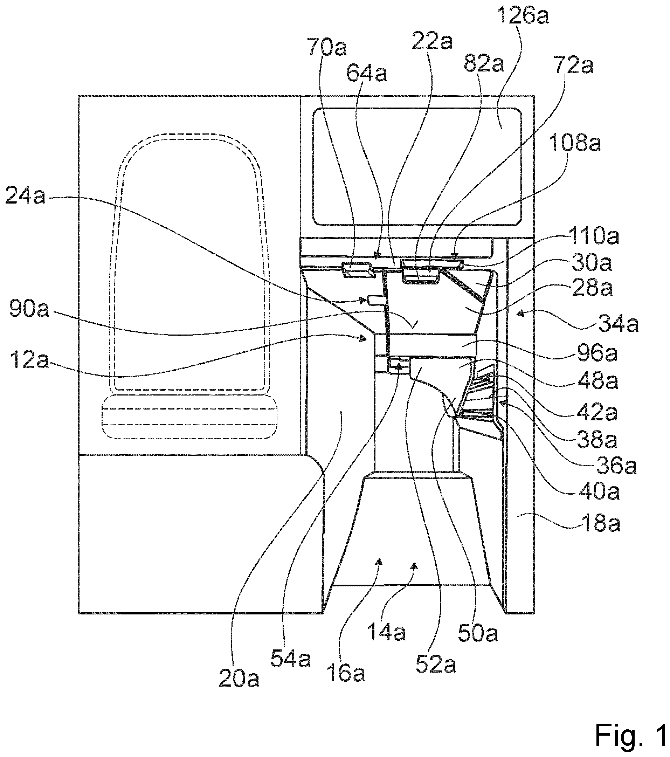

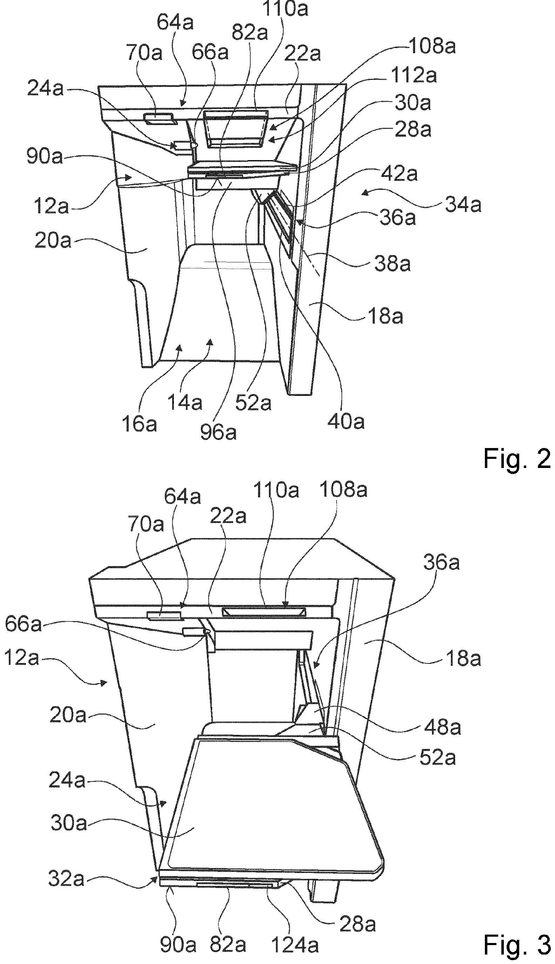

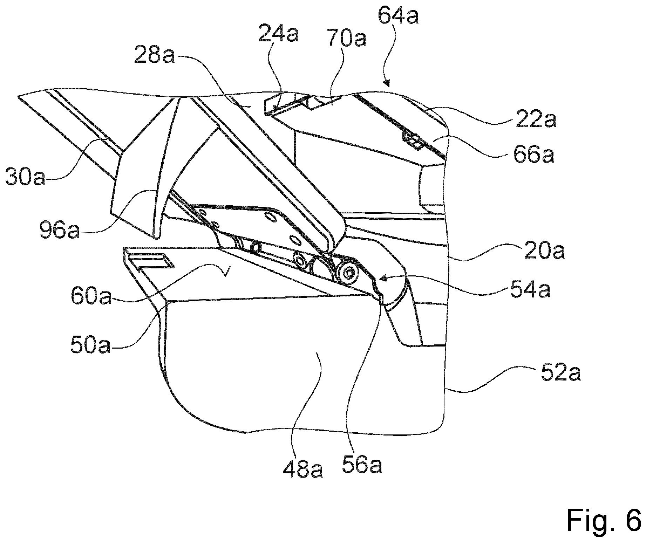

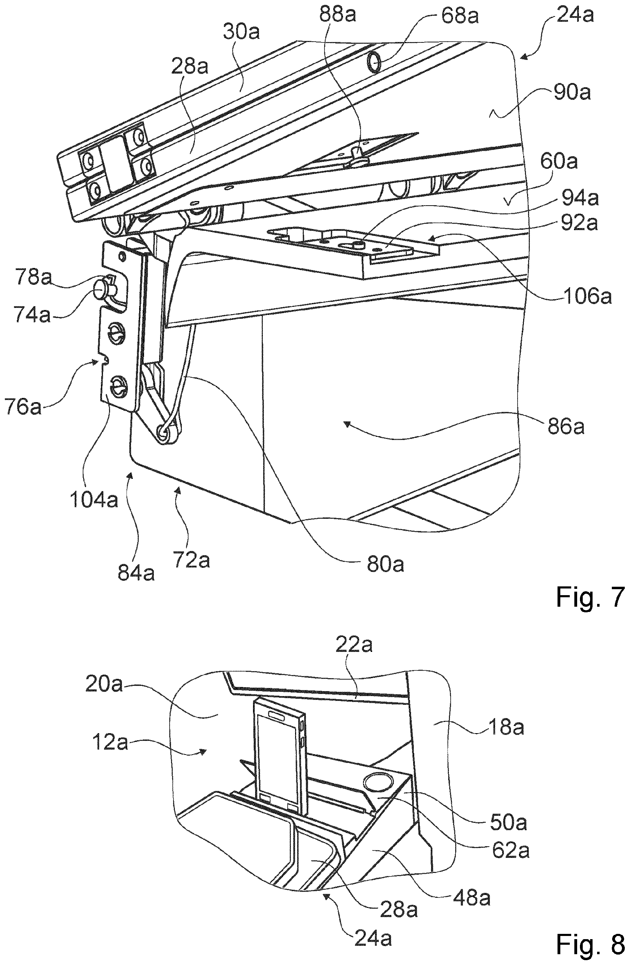

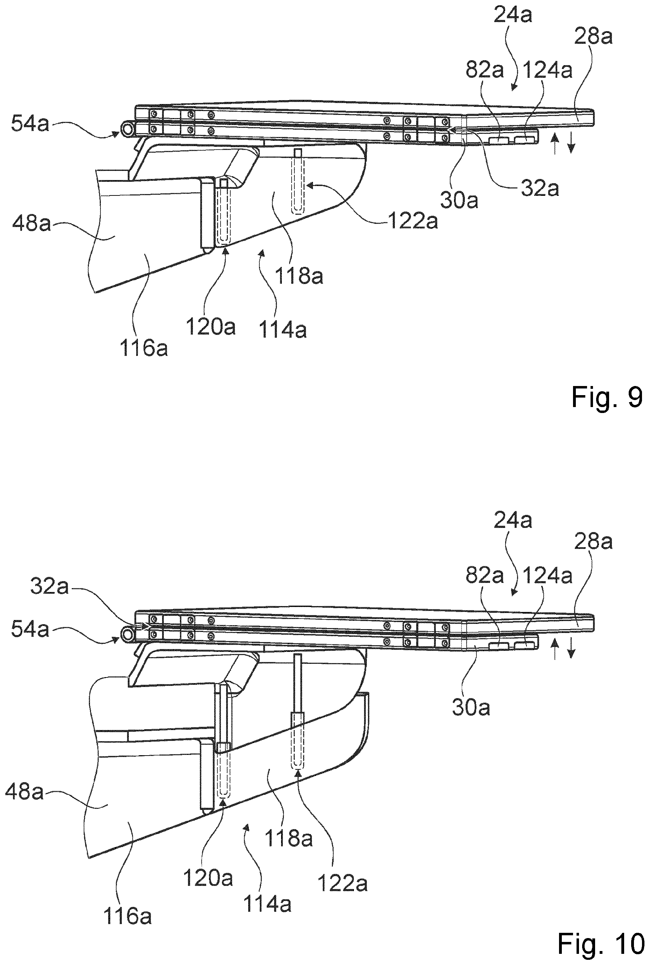

Die Figuren 1 bis 10 zeigen ein erstes Ausführungsbeispiel einer Flugzeugsitzvorrichtung. Die Flugzeugsitzvorrichtung ist Teil eines Flugzeugsitzbereiches. Der Flugzeugsitzbereich ist vorzugsweise als ein Businessclass- oder Firstclass-Fluggastsitzbereich ausgebildet. Der Flugzeugsitzbereich ist insbesondere in einer Flugzeugsitzkabine angeordnet. Der Fluggastsitzbereich umfasst einen Flugzeugsitz. Der Flugzeugsitz ist vorzugsweise als ein Businessclass- oder Firstclass-Flugzeugsitz ausgebildet. Der Flugzeugsitz soll hier nicht näher beschrieben werden. Der Flugzeugsitz ist insbesondere als ein aus dem Stand der Technik bekannter Flugzeugsitz ausgebildet, der vorzugsweise insbesondere in eine im Wesentlichen ebene Liegestellung verfahrbar ist. Der Flugzeugsitz ist vorzugsweise insbesondere als ein Full-Flat-Flugzeugsitz ausgebildet. Der Flugzeugsitz umfasst dazu einen Sitzboden. Der Flugzeugsitz weist eine schwenkbare Rückenlehne auf. Die Rückenlehne kann vorzugsweise in eine im Wesentlichen horizontale Stellung gebracht werden. Der Flugzeugsitz umfasst eine Aufständereinheit, über die der Flugzeugsitz auf einer Aufständerebene, die vorzugsweise von einem Kabinenboden der Flugzeugkabine ausgebildet ist, aufgeständert ist.

Die Flugzeugsitzvorrichtung umfasst ein Umhausungselement 12a. Das Umhausungselement 12a ist Teil des Flugzeugsitzbereichs. Das Umhausungselement 12a bildet vorzugsweise zumindest teilweise einen Ottomanen 14a aus. Der Ottomane 14a ist insbesondere dazu vorgesehen, eine Fußablagefläche bereitzustellen, die insbesondere in einer Liegeposition des Flugzeugsitzes eine Liegefläche des Flugzeugsitzes erweitert. Das Umhausungselement 12a ist insbesondere vor dem Flugzeugsitz angeordnet. Vorzugsweise ist das Umhausungselement 12a neben einem vor dem Flugzeugsitz angeordneten weiteren Flugzeugsitz angeordnet. Das Umhausungselement 14a bildet eine dem Flugzeugsitz zugewandte Einbuchtung 16a aus. Die Einbuchtung 16a bildet einen Raum aus, in dem der Ottomane 14a angeordnet ist. Die Einbuchtung 16a ist von einer ersten Seitenwand 18a, einer zweiten Seitenwand 20a und einer oberen Wandung 22a des Umhausungselements 12a gebildet. Die obere Wandung 22a schließt die Einbuchtung 16a nach oben hin ab. Die obere Wandung 22a ist schräg ausgebildet. Insbesondere weist die obere Wandung 22a an einem vorderen, dem Flugzeugsitz zugewandten Ende einen größeren Abstand zu dem Kabinenboden auf als an einem hinteren, dem Flugzeugsitz abgewandten Ende. Das Umhausungselement 12a weist vorzugsweise oberhalb der Einbuchtung 16a, in der der Ottomane 14a angeordnet ist, wenigstens einen Monitor 126a auf. Der Monitor 126a ist insbesondere zur Verwendung durch den auf dem Flugzeugsitz sitzenden Passagier vorgesehen.

Die Flugzeugsitzvorrichtung umfasst eine Tischeinheit 24a. Die Tischeinheit 24a ist an dem Umhausungselement 14a angebunden. Die Tischeinheit 24a ist insbesondere dazu vorgesehen, zumindest in einer Stellung eine Tischoberfläche 26a, also insbesondere eine Ablagefläche für einen auf dem Flugzeugsitz sitzenden Passagier bereit zu stellen. Die Tischeinheit 24a ist vorzugsweise zweiteilig ausgebildet. Vorzugsweise weist die Tischeinheit 24a einen Tischgrundkörper 28a auf. Der Tischgrundkörper 28a ist von einer flachen ebenen Platte gebildet. Der Tischgrundkörper 28a bildet vorzugsweise einen Teil der Tischeinheit 24a aus, über den die Tischeinheit 24a an andere Elemente, wie insbesondere an das Umhausungselement 14a, anbindbar ist. Der Tischgrundkörper 28a bildet einen ersten Teil der Tischoberfläche 26a aus. Die Tischeinheit 24a umfasst einen an dem Tischgrundkörper 28a angeordneten Tischkörper 30a. Der Tischkörper 30a ist von einer flachen ebenen Platte gebildet. Vorzugsweise weist der Tischkörper 30a zumindest eine gleiche Dicke auf wie der Tischgrundkörper 28a. Vorzugsweise ist der Tischkörper 30a verschwenkbar an dem Tischgrundkörper 28a angeordnet. Grundsätzlich wäre es auch denkbar, dass der Tischkörper 30a linear verschiebbar, beispielsweise teleskopisch ausziehbar, mit dem Tischgrundkörper 28a verbunden ist. Vorzugsweise ist der Tischkörper 30a in einer Querrichtung schwenkbar zu dem Tischgrundkörper 28a ausgebildet. Die Tischeinheit 24a weist eine Schwenklagereinheit 32a, auf mittels der der Tischkörper 30a zu dem Tischgrundkörper 28a schwenkbar gelagert ist. Die Schwenklagereinheit 32a ist vorzugsweise von zwei separaten Scharnierelementen gebildet, die insbesondere beabstandet zueinander zwischen dem Tischgrundkörper 28a und dem Tischkörper 30a angeordnet sind. Die beiden Scharnierelemente der Schwenklagereinheit 32a bilden eine gemeinsame Schwenkachse aus. Grundsätzlich ist es auch denkbar, dass die Schwenklagereinheit 32a lediglich ein Scharnierelement aufweist, das insbesondere länglich ausgebildet ist und sich vorzugsweise über einen Großteil einer Breite des Tischgrundkörpers 28a bzw. des Tischkörpers 30a erstreckt. Mittels der Schwenklagereinheit 32a ist der Tischkörper 30a um 180 Grad relativ zu dem Tischgrundkörper 28a verschwenkbar. Die Schwenklagereinheit 32a ist vorzugsweise gedämpft ausgebildet, sodass insbesondere ein Ausklappen des Tischkörpers 30 von dem Tischgrundkörper 28a gedämpft verläuft. In einem eingeklappten Zustand liegt der Tischkörper 30a mit seiner Oberseite auf einer Oberseite des Tischgrundkörpers 28a auf. Grundsätzlich ist es dabei denkbar, dass in dem eingeklappten Zustand zumindest in einer Stellung der Tischeinheit 24a die Oberseite des Tischkörpers 30a als eine zweite Tischoberfläche 26a ausgebildet ist, die von einem Passagier nutzbar ist. In einer ausgeklappten Stellung ist der Tischkörper 30a neben dem Tischgrundkörper 28a angeordnet. In dem ausgeklappten Zustand erweitert der Tischkörper 30a die Tischoberfläche 26a mit seiner Oberseite. In dem ausgeklappten Zustand sind der Tischgrundkörper 28a und der Tischkörper 30a mit ihren Oberseiten eben zueinander ausgerichtet. Die Oberseiten des Tischkörpers 30a und des Tischgrundkörpers 28a bilden in dem ausgeklappten Zustand eine ebene Fläche aus, die die Tischoberfläche 26a ausbildet. Grundsätzlich wäre es auch denkbar, dass die Tischeinheit 24a weitere Tischkörper 30a aufweist, die beweglich an dem Tischgrundkörper 28a und/oder dem Tischkörper 30a angebracht sind und die Tischoberfläche 26a in zumindest einem Zustand erweitern könnten.

Die Flugzeugsitzvorrichtung umfasst eine Lagervorrichtung 34a, die dazu vorgesehen ist, die Tischeinheit 24a beweglich zu lagern. Die Lagervorrichtung 34a ist dazu vorgesehen, die Tischeinheit 24a relativ zu dem Umhausungselement 14a beweglich zu lagern. Über die Lagervorrichtung 34a ist die Tischeinheit 24a an das Umhausungselement 14a angebunden. Die Lagervorrichtung 34a ist vorzugsweise insbesondere dazu vorgesehen, die Tischeinheit 24a zwischen einer Verstaustellung und einer Gebrauchsstellung zu verstellen. Vorzugsweise ist die Lagervorrichtung 34a dazu vorgesehen, die Tischeinheit 24a in eine zwischen der Verstaustellung und der Gebrauchsstellung liegende Zwischenstellung zu verstellen. In der Zwischenstellung ist die Tischeinheit 24a vorzugsweise im Wesentlichen in einer Horizontalebene ausgerichtet. Die Horizontalebene ist dabei im Wesentlichen parallel zu der Aufständerebene ausgerichtet.

In der Verstaustellung ist die Tischeinheit 24a schräg an dem Umhausungselement 14a angebracht. Die Lagervorrichtung 34a ist dazu vorgesehen, die Tischeinheit 24a in der Verstaustellung schräg an dem Umhausungselement 14a anzubinden. Die Tischeinheit 24a ist in der Verstaustellung an die obere Wandung 22a des Umhausungselements 14a angeklappt. Vorzugsweise liegt die Tischeinheit 24a in der Verstaustellung zumindest teilweise an der oberen Wandung 22a des Umhausungselements 14a an. In der Verstaustellung ist die Tischeinheit 24a in ihrem eingeklappten Zustand. In der Verstaustellung sind der Tischgrundkörper 28a und der Tischkörper 30a in ihrem eingeklappten Zustand. Die Tischeinheit 24a kann nur in dem eingeklappten Zustand in die Verstaustellung überführt werden. Die Tischeinheit 24a liegt insbesondere mit der Unterseite des Tischkörpers 30a an der oberen Wandung 22a des Umhausungselements 14a an. In der Verstaustellung ist die Tischeinheit 24a schräg zu dem Kabinenboden ausgerichtet. Insbesondere ist die Tischeinheit 24a nicht parallel und auch nicht orthogonal zu dem Kabinenboden, also einer Aufständerebene, ausgerichtet. Die Tischeinheit 24a ist in der Verstaustellung insbesondere um einen Winkel von zumindest 20 Grad aus einer parallel zu dem Kabinenboden ausgerichteten Horizontalebene herausgeschwenkt. Die Tischeinheit 24a weist in der Verstaustellung vorzugsweise einen Winkel von 20 Grad zu der Aufständerebene auf. Vorteilhaft weist die Tischeinheit 24a einen Winkel relativ zu der Aufständerebene auf, die zwischen 10 Grad und 45 Grad liegt.

In der Gebrauchsstellung ist die Tischeinheit 24a vorzugsweise von dem Umhausungselement 14a wegbewegt. In der Gebrauchsstellung ist die Tischeinheit 24a insbesondere in einem Bereich des Flugzeugsitzes angebracht. In der Gebrauchsstellung, insbesondere in der komplett ausgefahrenen, sitznahen Gebrauchsstellung ist die Tischeinheit 24a zumindest teilweise oberhalb des Flugzeugsitzes angeordnet. In der komplett ausgefahrenen, sitznahen Gebrauchsstellung ist die Tischeinheit 24a so über dem Flugzeugsitz angeordnet, dass ein auf dem Flugzeugsitz sitzender Passagier den Tisch komfortabel nutzen kann, beispielsweise zum Essen oder zum Abstellen eines Laptops. In der Gebrauchsstellung ist die Tischeinheit 24a vorzugsweise in einem ausgeklappten Zustand, sodass die gesamte Tischoberfläche 26a nutzbar ist.

Die Lagervorrichtung 34a ist dazu vorgesehen, die Tischeinheit 24a bei einer Verstellung der Tischeinheit 24a zwischen der Verstaustellung und der Gebrauchsstellung die Tischeinheit 24a in die Zwischenstellung zu verfahren. Die Zwischenstellung ist als eine Stellung der Tischeinheit 24a zwischen der Verstaustellung und der Gebrauchsstellung ausgebildet. Bei einer Verstellung der Tischeinheit 24a von der Verstaustellung in die Gebrauchsstellung oder von der Gebrauchsstellung in die Verstaustellung wird die Tischeinheit 24a mittels der Lagervorrichtung 34a immer zunächst in die Zwischenstellung verfahren. In der Zwischenstellung ist die Tischeinheit 24a im Wesentlichen in einer Horizontalen ausgerichtet. Die Tischeinheit 24a bildet in der Zwischenstellung eine ebene Ablagefläche aus. Die Tischeinheit 24a ist in der Zwischenstellung insbesondere in ihrem zusammengeklappten Zustand, wobei der Tischkörper 30a insbesondere an den Tischgrundkörper 28a angeklappt ist. In der Zwischenstellung kann die Tischeinheit 24a nicht in ihren entfalteten Zustand überführt werden. Insbesondere kann die Tischeinheit 24a nur dann in die Zwischenstellung verstellt werden, wenn diese in ihrem eingeklappten Zustand ist. Bei einer Verstellung aus der Verstaustellung in die Zwischenstellung und umgekehrt wird die Tischeinheit 24a vorzugsweise lediglich verschwenkt. Bei einer Verstellung von der Gebrauchsstellung in die Zwischenstellung und umgekehrt, ist die Tischeinheit 24a vorzugsweise dazu vorgesehen lediglich axial verschoben zu werden.

Zur Verstellung der Tischeinheit 24a weist die Lagervorrichtung 34a zumindest eine Linearlagereinheit 36a auf. Die Linearlagereinheit 36a ist insbesondere zur Verstellung der Tischeinheit 24a zwischen der Zwischenstellung und der Gebrauchsstellung vorgesehen. Die Linearlagereinheit 36a bildet eine maximal eingefahrene Stellung aus. In der maximal eingefahrenen Stellung der Linearlagereinheit 36a ist die Tischeinheit 24a in der Zwischenstellung oder in der Verstaustellung angeordnet. Die Linearlagereinheit 36a bildet eine maximal ausgefahrene Stellung aus. In der maximal ausgefahrenen Stellung ist die Tischeinheit 24a in der sitznahen Gebrauchsstellung angeordnet. Die Linearlagereinheit 36a ist insbesondere dazu vorgesehen, die Tischeinheit 24a entlang einer Bewegungsbahn axial verschiebbar zu dem Umhausungselement 14a zu lagern. Die Linearlagereinheit 36a bildet eine Lagerachse 38a aus, die schräg zu der Aufständerebene ausgebildet ist. Die Lagerachse 38a ist vorzugsweise in Richtung des Flugzeugsitzes nach unten, also in Richtung der Aufständerebene geneigt. Die Lagerachse 38a weist vorzugsweise insbesondere einen Winkel von 8 Grad relativ zu der Aufständerebene auf. Grundsätzlich ist es auch denkbar, dass die Lagerachse 38a einen Winkel von 0 Grad bis 15 Grad mit der Aufständerebene einschließt. Die Linearlagereinheit 36a ist insbesondere dazu vorgesehen, die Tischeinheit 24a bei einer axialen Verschiebung in Richtung des Flugzeugsitzes in Richtung der Aufständerebene abzusenken. Dadurch weist die Tischeinheit 24a in ihrer komplett ausgefahrenen, sitznahen Gebrauchsstellung eine besonders ergonomische Höhe auf, während die Tischeinheit 24a in der Zwischenstellung und in der Verstaustellung vorteilhaft hoch angeordnet ist, um eine ausreichende Beinfreiheit im Bereich des Ottomanen 14a zu gewährleisten. Die Linearlagereinheit 36a umfasst vorzugsweise zwei parallel verlaufende in die Seitenwand 18a eingebrachte Führungsschienen 40a, 42a auf. Die Führungsschienen 40a, 42a sind fest mit der Seitenwand 18a verbunden. Die Führungsschienen 40a, 42a sind in vertikaler Richtung beabstandet zueinander angeordnet. Die Führungsschiene 40a ist unterhalb der Führungsschiene 42a angeordnet. Die Führungsschienen 40a, 42a definieren die Lagerachse 38a der Linearlagereinheit 36a. Die Linearlagereinheit 36a umfasst je Führungsschiene 40a, 42a ein Führungselement 44a, 46a. Das eine Führungselement 44a ist mit der Führungsschiene 40a gekoppelt. Das andere Führungselement 46a ist mit der Führungsschiene 42a gekoppelt. Die Führungselemente 44a, 46a sind jeweils auf der entsprechenden Führungsschiene 40a, 46a axial verschiebbar gelagert. Vorzugsweise sind die Führungselemente 44a, 46a insbesondere mittels einer Gleitlagerung auf den Führungsschienen 40a, 42a gelagert. Grundsätzlich ist es auch denkbar, dass wenigstens ein Führungselement 44a, 46a oder beide Führungselemente 44a, 46a mittels eines Wälzlagers verschiebbar auf der entsprechenden Führungsscheine 40a, 42a gelagert ist. Grundsätzlich ist es auch denkbar, dass die Linearlagereinheit 36a eine Bremseinheit aufweist, die dazu vorgesehen ist, eine Linearverschiebung der Tischeinheit 24a mittels der Linearlagereinheit 36a zumindest in einem sitznahen Bereich zumindest zu verzögern. Grundsätzlich ist es ebenso denkbar, dass die Linearlagereinheit 36a eine Unterstützungseinheit aufweist, die zumindest einen Kraftspeicher umfasst und insbesondere dazu vorgesehen ist, eine Linearbewegung der Tischeinheit 24a von einer Gebrauchsstellung in die Zwischenstellung zunächst zu unterstützen. Vorzugsweise ist es auch denkbar, dass die Linearlagereinheit 36a eine Arretiereinheit umfasst, die dazu vorgesehen ist, die Tischeinheit 24a in verschiedenen Positionen zwischen der Zwischenstellung und der sitznahen Gebrauchsstellung zu fixieren. Es ist vorzugsweise insbesondere denkbar, dass die Arretiereinheit zur Arretierung der Tischeinheit 24a Federdruckstücke, die in unterschiedliche Rastelemente einrasten können oder ein Bremselement umfassen, das die Tischeinheit 24a in verschiedenen Positionen auf den Führungsschienen 40a, 42a positionssicher fixiert, aufweist.

Die Lagervorrichtung 34a umfasst einen Lagerarm 48a. Der Lagerarm 48a ist dazu vorgesehen, die Tischeinheit 24a an das Umhausungselement 12a anzubinden. Der Lagerarm 48a ist vorzugsweise zwischen der Linearlagereinheit 36a und der Schwenklagereinheit 32a angeordnet. Der Lagerarm 48a ist vorzugsweise dazu vorgesehen, über die Linearlagereinheit 36a axial verschiebbar mit dem Umhausungselement 12a verbunden zu sein. Mittels der Linearlagereinheit 36a ist der Lagerarm 48a entlang der Lagerachse 38a linear verfahrbar. Der Lagerarm 48a ist als ein im Wesentlichen L-förmiges Bauteil ausgebildet. Der Lagerarm 48a weist eine erste Seite 50a und eine zweite Seite 52a auf. Die zweite Seite 52a ist im Wesentlichen orthogonal zu der ersten Seite 50a ausgerichtet. Vorzugsweise ist die erste Seite 50a als eine lange Seite des Lagerarms 48a ausgebildet. Die zweite Seite 52a ist vorzugsweise als eine kurze Seite des Lagerarms 48a ausgebildet. Die erste Seite 50a des Lagerarms 48a ist dem Umhausungselement 12a, insbesondere der Seitenwand 18a zugewandt. In einem montierten Zustand verläuft die erste Seite 50a des Lagerarms 48a im Wesentlichen parallel zu der Seitenwand 18a des Umhausungselements 12a. Der Lagerarm 48a ist in einem hinteren Endbereich seiner ersten Seite 50a mit dem Umhausungselement 12a gekoppelt. Der hintere Endbereich der ersten Seite 50a des Lagerarms 48a ist in einem montierten Zustand dem Flugzeugsitz abgewandt. Zur Anbindung des Lagerarms 48a an die Führungsschienen 40a, 42a der Linearlagereinheit 36a sind die Führungselemente 44a, 46a fest in dem hinteren Bereich der ersten Seite 50a des Lagerarms 48a angebracht. Eine Unterseite des Lagerarms 48a ist vorzugsweise schräg ausgebildet. Vorzugsweise weist der Lagerarm 48a in seinem hinteren Bereich einen geringeren Abstand zu der Aufständerebene auf als in einem vorderen Bereich. Dadurch kann insbesondere in einem dem Passagier zugewandten Bereich eine Beinfreiheit verbessert werden.

Die Tischeinheit 24a ist vorzugsweise an den Lagerarm 48a angebunden. Die Tischeinheit 24a ist verschwenkbar mit dem Lagerarm 48a verbunden. Zur schwenkbaren Anbindung der Tischeinheit 24a weist die Lagervorrichtung 34a eine Rotationslagereinheit 54a auf. Die Rotationslagereinheit 54a ist dazu vorgesehen, die Tischeinheit 24a zwischen der Verstaustellung und wenigstens der im Wesentlichen in Horizontalebene liegenden Zwischenstellung zu verschwenken. Die Rotationslagereinheit 54a ist vorzugsweise lediglich zur Verstellung der Tischeinheit 24a zwischen der Verstaustellung und der Zwischenstellung vorgesehen. Die Rotationslagereinheit 54a ist insbesondere dazu vorgesehen, die Tischeinheit 24a relativ zu dem Lagerarm 48a verschwenkbar zu lagern. Die Rotationslagereinheit 54a weist vorzugsweise zwei Scharnierelemente 56a, 58a auf. Die Scharnierelemente 56a, 58a sind an einem hinteren Ende der zweiten Seite 52a des Lagerarms 48a angeordnet. Die Scharnierelemente 56a, 58a bilden eine Schwenkachse 102a aus. Um die Schwenkachse 102a ist die Tischeinheit 24a relativ zu dem Lagerarm 48a der Lagervorrichtung 34a verschwenkbar. Die Scharnierelemente 56a, 58a sind jeweils mit einem ersten Ende fest mit dem Lagerarm 48a, insbesondere fest mit einem hinteren Ende der zweiten Seite 52a des Lagerarms 48a verbunden. Mit einem zweiten Ende sind die Scharnierelemente 56a, 58a jeweils fest mit der Tischeinheit 24a verbunden. Vorzugsweise sind die Scharnierelemente 56a, 58a jeweils mit dem Tischgrundkörper 28a der Tischeinheit 24a fest verbunden. Die Scharnierelemente 56a, 58a sind vorzugsweise insbesondere an einem hinteren Ende des Tischgrundkörpers 28a der Tischeinheit 24a fest angebunden. Die Scharnierelemente 56a, 58a sind vorzugsweise als gedämpfte Scharniere ausgebildet. Die als gedämpfte Scharniere ausgebildeten Scharnierelemente 56a, 58a sind vorzugsweise insbesondere dazu vorgesehen, bei einer Verschwenkung nach unten, also aus der Verstaustellung in die Zwischenstellung eine Bewegung der Tischeinheit 24a zu dämpfen. So kann insbesondere ein sanftes Herunterklappen der Tischeinheit 24a von der Verstaustellung in die Zwischenstellung erreicht werden. Bei einer Verschwenkung von der Zwischenstellung in die Verstaustellung sind die Scharnierelemente 56a, 58a dazu vorgesehen, keine Dämpfung auszuüben. Die Scharnierelemente 56a, 58a sind vorzugsweise als einfach drehmomentwirkende Drehscharniere (One-Way-Hinge) ausgebildet. Grundsätzlich wäre es auch denkbar, dass die Rotationslagereinheit 54a lediglich ein Scharnierelement aufweist. Vorzugsweise ist es ebenso denkbar, dass die Rotationslagereinheit 54a eine von den Scharnierelementen 56a, 58a separat ausgebildete Dämpfungseinheit aufweist, die dazu vorgesehen ist, eine Schwenkbewegung der Tischeinheit 24a zu dämpfen. Die separat ausgebildete Dämpfungseinheit weist ein Federelement auf. Das Federelement ist als eine Drehfeder ausgebildet. Das als Drehfeder ausgebildete Federelement ist vorzugsweise mittig zwischen den zwei Scharnierelementen 56a, 58a angeordnet. Das Federelement ist vorzugsweise an der Tischeinheit 24a angebracht. Die Tischeinheit 24a bildet zur Anbindung der Dämpfungseinheit einen Anbindungsbereich aus. Der Anbindungsbereich ist von zwei voneinander beabstandeten Halteelementen gebildet, die jeweils eine Befestigungsöffnung aufweisen. Die Befestigungsöffnungen sind vorzugsweise kreisrund ausgebildet. In den Befestigungsöffnungen ist jeweils ein Gegenhalterelement eingebracht. Die Gegenhalterelemente können zur richtigen Positionierung in den Befestigungsöffnungen verdreht werden. Die Gegenhalterelemente können mittels Schraubenelementen, vorzugsweise Madenschrauben, in der jeweiligen Befestigungsöffnung positions- und rotationsfest befestigt werden. Die Gegenhalterelemente weisen jeweils einen Abstützbereich auf, an dem sich das Federelement mit einem der Tischeinheit 24a zugewandten Abstützbereich abstützen kann. Mit einem zweiten Abstützbereich stützt sich das als Rotationsfeder ausgebildete Federelement an dem Lagerarm 48a ab. Durch das Federelement der Dämpfungseinheit kann eine Verschwenkung der Tischeinheit 24a von der Verstaustellung in die Zwischenstellung gedämpft werden. Eine Verstellung von der Zwischenstellung in die Verstaustellung wird von dem Federelement der Dämpfungseinheit vorzugsweise unterstützt.

Der Lagerarm 48a bildet eine Abstützfläche 60a aus. Die Abstützfläche 60a ist dazu vorgesehen, dass sich die Tischeinheit 24a in der Gebrauchsstellung zumindest teilweise darauf abstützt. Die Abstützfläche 60a ist von einer Oberseite des Lagerarms 48a vorzugsweise hauptsächlich von der zweiten Seite 52a des Lagerarms 48a ausgebildet. Die Abstützfläche 60a ist als eine im Wesentlichen ebene Fläche ausgebildet. Die Abstützfläche 60a bildet einen Anschlag für die Tischeinheit 24a aus, auf der die Tischeinheit 24a in der Zwischenstellung und Gebrauchsstellung aufliegt. Die Tischeinheit 24a liegt in einem mittels der Rotationslagereinheit 54a heruntergeklappten Stellung auf der Abstützfläche 60a auf. Die Tischeinheit 24a liegt vorzugsweise insbesondere mit einer Unterseite 90a des Tischgrundkörpers 28a auf der Abstützfläche 60a auf. Grundsätzlich ist es auch denkbar, dass die Tischeinheit 24a so ausgebildet ist, dass sowohl die Unterseite 90a des Tischgrundkörpers 28a als auch eine Unterseite des Tischkörpers 30a in einem heruntergeklappten Zustand auf der Abstützfläche 60a aufliegt. Die Abstützfläche 60a ist insbesondere dazu vorgesehen, dass in die Tischeinheit 24a eingeleitete Kräfte über sie in den Lagerarm 48a eingeleitet werden können. Betriebskräfte, beispielsweise Gewichtskräfte von auf der Tischeinheit 24a abgestellten Gegenständen, die auf die Tischeinheit 24a wirken, werden von der Abstützfläche 60a abgestützt und dadurch zumindest teilweise in den Lagerarm 48a eingeleitet. Durch die Abstützung von Betriebskräften über die Abstützfläche 60a in den Lagerarm 48a kann die Tischeinheit 24a besonders stabil abgestützt werden.

Der Lagerarm 48a bildet ein Zusatzelement 62a aus. Das Zusatzelement 62a ist insbesondere in einem hinter der Tischeinheit 24a angeordneten Bereich des Lagerarms 48a angeordnet. Das Zusatzelement 62a ist insbesondere in einem Bereich der ersten Seite 50a des Lagerarms 48a angeordnet, der unmittelbar an die Tischeinheit 24a angrenzt. Das Zusatzelement 62a ist insbesondere in einem Übergangsbereich von der ersten Seite 50a zu der zweiten Seite 52a des Lagerarms 48a angeordnet. Das Zusatzelement 62a ist vorzugsweise als ein Tablett- und/oder Handyhalter ausgebildet. Das als Tablet- und/oder Handyhalter ausgebildete Zusatzelement 62a weist eine Haltevorrichtung auf, in der ein Handy oder ein Tablet in einer Gebrauchsposition sicher gehalten und/oder eingeklemmt werden kann. Grundsätzlich ist es auch denkbar, dass das Zusatzelement 62a als Verstauelement ausgebildet ist. Das Verstauelement bildet einen Verstauraum aus, der vorzugsweise mittels eines Verschlusselements verschlossen oder geöffnet werden kann. In dem als Verstauelement ausgebildeten Zusatzelement 62a können beispielsweise kleinere Gegenstände, wie beispielsweise ein Smartphone oder andere Gegenstände aufbewahrt werden. Alternativ kann das Zusatzelement 62a auch anders ausgebildet sein, beispielsweise als ein Cupholder oder als eine zusätzliche kleine Abstellfläche. Grundsätzlich ist es ebenso denkbar, dass das Zusatzelement 62a als ein Versorgungselement ausgebildet ist, das beispielsweise Anschlüsse für Strom, Audio oder USB aufweist.

Die Lagervorrichtung 34a umfasst ein Verriegelmodul 64a. Das Verriegelmodul 64a ist dazu vorgesehen, die Tischeinheit 24a in der Verstaustellung zu sichern. Das Verriegelmodul 64a ist insbesondere dazu vorgesehen, die Tischeinheit 24a in der Verstaustellung an dem Umhausungselement 12a zu sichern. Das Verriegelmodul 64a ist dazu vorgesehen, die Tischeinheit 24a betriebssicher in der Verstaustellung zu verriegeln, sodass die Tischeinheit 24a insbesondere nicht ungewollt aus der Verstaustellung herausbewegt werden kann. Das Verriegelmodul 64a ist dazu vorgesehen, die Tischeinheit 24a in der Verstaustellung formschlüssig zu verriegeln. Das Verriegelmodul 64a ist vorzugsweise insbesondere dazu vorgesehen, die Tischeinheit 24a automatisch, also selbsttätig zu verriegeln, wenn die Tischeinheit 24a in die Verstaustellung bewegt wird. Das Verriegelmodul 64a umfasst eine Verriegelstellung und eine Entriegelstellung. In der Verriegelstellung des Verriegelmoduls 64a kann die Tischeinheit 24a in der Verstaustellung gesichert werden. In der Entriegelstellung des Verriegelmoduls 64a ist die Tischeinheit 24a freigegeben und kann aus der Verstaustellung herausbewegt werden. Das Verriegelmodul 64a umfasst ein Sicherungselement 66a. Das Sicherungselement 66a ist als ein Sicherungspin ausgebildet. Das Sicherungselement 66a ist beweglich in dem Umhausungselement 12a gelagert. Vorzugsweise ist das Sicherungselement 66a seitlich in der Seitenwand 20a beweglich gelagert. Das Sicherungselement 66a ist in der Verriegelstellung des Verriegelmoduls 64a aus der Seitenwand 20a herausgefahren. Das Sicherungselement 66a steht in der Verriegelstellung aus dem Umhausungselement 12a heraus. Die Tischeinheit 24a weist ein Formschlusselement 68a auf, das dazu vorgesehen ist, dass das Sicherungselement 66a zur Sicherung der Tischeinheit 24a formschlüssig in das Formschlusselement 68a eingreift. Das Formschlusselement 68a ist als ein Loch ausgebildet. Das Formschlusselement 68a ist seitlich in die Tischeinheit 24a eingebracht. Das Formschlusselement 68a ist vorzugsweise in eine der Seitenwand 20a zugewandten Seite der Tischeinheit 24a eingebracht. Das Formschlusselement 68a ist insbesondere seitlich in den Tischgrundkörper 28a der Tischeinheit 24a eingebracht. Grundsätzlich ist es auch denkbar, dass das Formschlusselement 68a an der Unterseite der Tischeinheit 24a, insbesondere an der Unterseite 90a des Tischgrundkörpers 28a angeordnet ist. Grundsätzlich ist es insbesondere auch denkbar, dass das Sicherungselement 66a an der Tischeinheit 24a, beispielsweise an einer Unterseite 90a des Tischgrundkörpers 28a, angeordnet ist und das Formschlusselement 68a in das Umhausungselement 12a, insbesondere die Seitenwand 20a, eingebracht ist. In der Verstaustellung greift das Sicherungselement 66a formschlüssig in das Formschlusselement 68a und hält die Tischeinheit 24a so in der Verstaustellung. In der Verstaustellung greift das Sicherungselement 66a seitlich formschlüssig in die Tischeinheit 24a ein. In der Entriegelstellung ist das Sicherungselement 66a zumindest im Wesentlichen innerhalb des Umhausungselements 12a insbesondere innerhalb der Seitenwand 20a angeordnet. Das Sicherungselement 66a ist in der Entriegelstellung aus einem Bereich der Tischeinheit 24a heraus bewegt. In der Entriegelstellung ist das Sicherungselement 66a aus dem Formschlusselement 68a der Tischeinheit 24a heraus bewegt. In der Entriegelstellung ist eine formschlüssige Verbindung zwischen dem Sicherungselement 66a und dem Formschlusselement 68a der Tischeinheit 24a aufgehoben und die Tischeinheit 24a kann aus der Verstaustellung verstellt werden. Das Sicherungselement 66a wird vorzugsweise linear zwischen der Verriegelstellung und der Entriegelstellung verschoben. Die Verriegelstellung ist die Neutralstellung des Verriegelmoduls 64a. Vorzugsweise verstellt sich das Verriegelmodul 64a, wenn keine Kraft, insbesondere keine von einem Passagier ausgelöste Entriegelungskraft auf das Verriegelmodul 64a wirkt, automatisch in die Verriegelstellung. Das Sicherungselement 66a ist in einem unbetätigten Zustand des Verriegelmoduls 64a in seiner Verriegelstellung angeordnet. Dazu weist das Verriegelmodul 64a ein nicht näher dargestelltes Kraftspeicherelement, wie vorzugsweise ein Federelement auf, das das Sicherungselement 66a in Richtung seiner Verriegelstellung drückt. Das Sicherungselement 66a weist an seinem der Tischeinheit 24a zugewandten Ende eine Schrägfläche auf, über die die Tischeinheit 24a bei einem Verschwenken in die Verstaustellung das Sicherungselement 66a auslenken kann, sodass dieses in der Verstaustellung in das Formschlusselement 68a der Tischeinheit 24a formschlüssig eingreifen kann.

Das Verriegelmodul 64a weist ein Betätigungsmittel 70a auf. Das Betätigungsmittel 70a ist zur Betätigung des Verriegelmoduls 64a vorgesehen. Das Betätigungsmittel 70a ist vorzugsweise dazu vorgesehen, von einer Person, insbesondere einem auf dem Flugzeugsitz sitzenden Passagier, betätigt zu werden. Das Betätigungsmittel 70a ist als ein Betätigungshebel ausgebildet. Das als Betätigungshebel ausgebildete Betätigungsmittel 70a ist dazu vorgesehen, von einem Bediener ergriffen und zwischen einer Ruheposition (Neutralstellung) und einer Betätigungsposition zu bewegen, vorzugsweise zu verschwenken. Das Betätigungsmittel 70a ist mit dem Sicherungselement 66a gekoppelt. Ist das Betätigungsmittel 70a in seiner Ruheposition, ist das Sicherungselement 66a in seiner Verriegelstellung. In der Betätigungsposition des Betätigungsmittels 70a ist das Sicherungselement 66a in seine Entriegelstellung bewegt. Durch die Betätigung des Betätigungsmittels 70a kann ein Bediener das Verriegelmodul 64a betätigen, insbesondere das Verriegelmodul 64a zwischen seiner Verriegelstellung und seiner Entriegelstellung verstellen. Insbesondere kann ein Bediener die Tischeinheit 24a durch Betätigung des Betätigungsmittels 70a des Verriegelmoduls 64a aus seiner Verstaustellung herausbewegen. Ist die Tischeinheit 24a in ihrer Verstauposition und durch das Verriegelmodul 64a gesichert und ein Bediener entriegelt das Verriegelmodul 64a durch Betätigen des Betätigungsmittels 70a, verfährt die Tischeinheit 24a durch ihre Gewichtskraft automatisch von der Verstaustellung in die Zwischenstellung. Das Betätigungsmittel 70a ist in dem Umhausungselement 12a angeordnet. Vorzugsweise ist das Betätigungsmittel 70a insbesondere an einer dem Flugzeugsitz zugewandten Seite des Umhausungselements 12a in Höhe der angeklappten Tischeinheit 24a angeordnet. Vorzugsweise ist das Betätigungsmittel 70a im Wesentlichen seitlich neben der Tischeinheit 24a an dem Umhausungselement 12a angebunden.

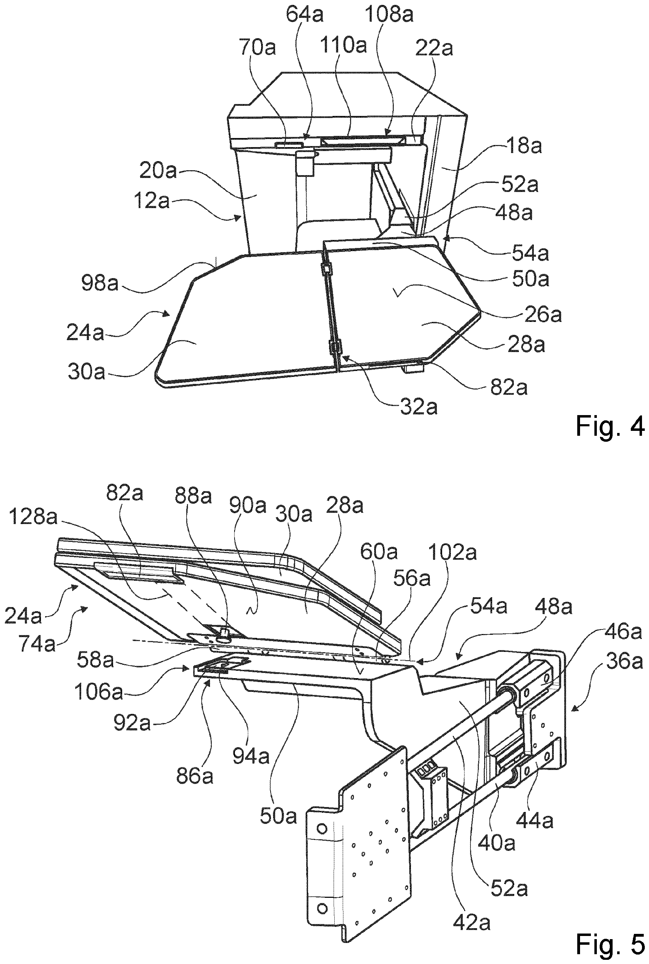

Die Lagervorrichtung 34a umfasst eine Verriegeleinheit 72a. Die Verriegeleinheit 72a ist dazu vorgesehen, die Tischeinheit 24a in der Zwischenstellung zu verriegeln. Die Verriegeleinheit 72a ist insbesondere dazu vorgesehen, dass die Tischeinheit 24a, wenn sie in die Zwischenstellung verstellt wird, zunächst verriegelt ist. Die Verriegeleinheit 72a ist dazu vorgesehen, zumindest die Linearlagereinheit 36a zu verriegeln, wenn die Tischeinheit 24a in der Zwischenstellung angeordnet ist. Die Verriegeleinheit 72a umfasst ein Formschlusselement 74a, das fest mit dem Umhausungselement 12a verbunden ist. Das Formschlusselement 74a ist vorzugsweise als ein feststehender Befestigungsbolzen ausgebildet. Das Formschlusselement 74a ist an einer Innenseite der Seitenwand 18a angeordnet. Das Formschlusselement 74a ist insbesondere an einem hinteren Ende der Linearlagereinheit 36a, vorzugsweise an einem hinteren Ende der Führungsschienen 40a, 42a angeordnet. Das als feststehender Befestigungsbolzen ausgebildete Formschlusselement 74a ragt vorzugsweise im Bereich hinter den beiden Führungsschienen 40a, 42a der Linearlagereinheit 36a von der Seitenwand 18a nach innen. Vorzugsweise überragt das Formschlusselement 74a die Führungsschienen 40a, 42a. Die Verriegeleinheit 72a umfasst einen Schnappmechanismus 76a. Der Schnappmechanismus 76a ist zur Kopplung mit dem Formschlusselement 74a vorgesehen. Der Schnappmechanismus 76a ist fest mit dem Lagerarm 48a verbunden. Der Schnappmechanismus 76a ist vorzugsweise insbesondere an einem hinteren Ende der ersten Seite 50a des Lagerarms 48a angeordnet. Der Schnappmechanismus 76a umfasst vorzugsweise ein korrespondierend zu dem als Befestigungsbolzen ausgebildeten Formschlusselement 74a ausgebildetes Formschlusselement 78a. Das Formschlusselement 78a des Schnappmechanismus 76a ist als ein schwenkbares Hakenelement ausgebildet. Der Schnappmechanismus 76a umfasst ein Gehäuse 104a, in dem das als Hakenelement ausgebildete Formschlusselement 78a schwenkbar gelagert ist. Das als Hakenelement ausgebildete Formschlusselement 78a ist gegen eine Federkraft aus ihrer Verriegelstellung auslenkbar. In Ihrer Verriegelstellung kann das als Hakenelement ausgebildete Formschlusselement 78a das als Befestigungsbolzen ausgebildete Formschlusselement 74a umgreifen. Das als Hakenelement ausgebildete Formschlusselement 78a kann das als Befestigungsbolzen ausgebildete Formschlusselement 74a formschlüssig umgreifen, wenn die Linearlagereinheit 36a in ihrer maximal eingefahrenen Stellung angeordnet ist. Das als Hakenelement ausgebildete Formschlusselement 78a ist mittels eines Übertragungselements 80a betätigbar. Das Übertragungselement 80a ist als ein Bowdenzug ausgebildet. Das als Bowdenzug ausgebildete Übertragungselement 80a ist mit dem als Haken ausgebildeten Formschlusselement 78a gekoppelt. Das als Bowdenzug ausgebildete Übertragungselement 80a ist in der Figur 5 lediglich schematisch dargestellt. Durch eine Betätigungsbewegung des Übertragungselements 80a kann das als Haken ausgebildete Formschlusselement 78a von seiner Verriegelstellung in seine Entriegelstellung gebracht werden. Ist das als Haken ausgebildete Formschlusselement 78a in seiner Entriegelstellung, ist die Linearlagereinheit 36a freigegeben und der Lagerarm 48a mit dem daran befestigten Tischeinheit 24a kann entlang der Lagerachse 38a linear verschoben werden. Wird die Tischeinheit 24a aus einer Gebrauchsstellung mittels der Linearlagereinheit 36a wieder in ihre Zwischenstellung verschoben, rastet das als Haken ausgebildete Formschlusselement 78a des Schnappmechanismus 76a automatisch hinter dem als Haltebolzen ausgebildeten Formschlusselement 74a ein und verriegelt so die Verriegeleinheit 72a selbsttätig. Die Tischeinheit 24a wird in der Zwischenstellung automatisch wieder verriegelt.

Die Verriegeleinheit 72a umfasst ein Betätigungselement 82a, mittels dem die Verriegeleinheit 72a entriegelbar ist. Das Betätigungselement 82a ist als ein Betätigungshebel ausgebildet. Das Betätigungselement 82a ist in der Tischeinheit 24a angeordnet. Vorzugsweise ist das Betätigungselement 82a an einem vorderen Ende des Tischgrundkörpers 28a in die Tischeinheit 24a integriert. Das als Betätigungshebel ausgebildete Betätigungselement 82a ist dazu vorgesehen, um eine horizontal verlaufende Schwenkachse verschwenkt zu werden. Das Betätigungselement 82a ist dazu vorgesehen, zur Betätigung von einem Bediener ergriffen und um seine Schwenkachse verschwenkt, vorzugsweise nach oben verschwenkt zu werden. Das Betätigungselement 82a ist vorzugsweise mechanisch mit dem Übertragungselement 80a des Schnappmechanismus 76a gekoppelt. Zur mechanischen Kopplung des Betätigungselements 82a mit dem Übertragungselement 80a weist die Verriegeleinheit 72a eine nicht näher spezifizierte Mechanik 128a auf. Die Mechanik 128a verläuft vorzugsweise im Inneren der Tischeinheit 24a, insbesondere in dem Tischgrundkörper 28a. Durch die Kopplung kann der Schnappmechanismus 76a, also insbesondere die Verriegeleinheit 72a mittels des Betätigungselements 82a betätigt werden. Durch eine Betätigung des Betätigungselements 82a in der Zwischenstellung der Tischeinheit 24a durch einen Benutzer ist die Verriegeleinheit 72a entriegelbar und die Tischeinheit 24a dann aus der Zwischenstellung heraus bewegbar. Dabei fährt die Tischeinheit 24a insbesondere durch die schräge Lagerachse 38a automatisch in die Gebrauchsstellung.

Die Verriegeleinheit 72a umfasst eine Sicherungseinheit 84a. Die Sicherungseinheit 84a ist dazu vorgesehen, dass die Verriegeleinheit 72a nur entriegelt werden kann, wenn die Tischeinheit 24a vollständig in der Zwischenstellung angeordnet ist. Die Sicherungseinheit 84a ist insbesondere dazu vorgesehen, eine Betätigung der Verriegeleinheit 72a zu verhindern, wenn die Tischeinheit 24a nicht in der Zwischenstellung angeordnet ist. Die Sicherungseinheit 84a ist vorzugsweise dazu vorgesehen, eine Wirkverbindung zwischen dem Übertragungselement 80a des Schnappmechanismus 76a und dem Betätigungselement 82a der Verriegeleinheit 72a lediglich herzustellen, wenn die Tischeinheit 24a in der Zwischenstellung angeordnet ist. Vorzugsweise ist die Sicherungseinheit 84a insbesondere dazu vorgesehen, eine Wirkverbindung zwischen dem Übertragungselement 80a des Schnappmechanismus 76a und dem Betätigungselement 82a der Verriegeleinheit 72a zu unterbrechen, wenn die Tischeinheit 24a nicht in der Zwischenstellung angeordnet ist, insbesondere, wenn die Tischeinheit 24a mittels der Rotationslagereinheit 54a in Richtung der Verstaustellung verschwenkt ist. Zur Unterbrechung der Wirkverbindung zwischen dem Übertragungselement 80a des Schnappmechanismus 76a und dem Betätigungselement 82a der Verriegeleinheit 72a weist die Sicherungseinheit 84a einen Koppelmechanismus 86a auf. Der Koppelmechanismus 86a ist wirkungstechnisch zwischen dem Übertragungselement 80a des Schnappmechanismus 76a und dem Betätigungselement 82a der Verriegeleinheit 72a angeordnet. Der Koppelmechanismus 86a ist insbesondere zwischen dem Tischgrundkörper 28a der Tischeinheit 24a und dem der zweiten Seite 52a des Lagerarms 48a angeordnet. Der Koppelmechanismus 86a weist ein tischseitiges Koppelelement 88a auf. Das tischseitige Koppelelement 88a ist auf der Unterseite 90a des Tischgrundkörpers 28a der Tischeinheit 24a angeordnet. Das tischseitige Koppelelement 88a ist als ein bewegliches Element ausgebildet. Das tischseitige Koppelelement 88a ist bewegungstechnisch mit dem Betätigungselement 82a der Verriegeleinheit 72a gekoppelt. Das tischseitige Koppelelement 88a ist über ein in einem Inneren des Tischgrundkörpers 28a verlaufendes, nicht näher dargestelltes Übertragungselement mit dem Betätigungselement 82a verbunden. Das Übertragungselement ist vorzugsweise als ein Bowdenzug ausgebildet. Es ist grundsätzlich auch denkbar, dass das Übertragungselement als eine Mechanik aus einem oder mehreren Hebelelementen ausgebildet ist. Das Koppelelement 88a ist als ein Stiftelement ausgebildet. Vorzugsweise ist das Koppelelement 88a insbesondere als ein Stiftelement mit einem Pilzkopf ausgebildet. Der Koppelmechanismus 86a umfasst ein zweites, lagerarmseitiges Koppelelement 92a. Das lagerarmseitige Koppelelement 92a umfasst ein Formschlusselement 94a, in das das als Stiftelement ausgebildete tischseitige Koppelelement 88a eingreifen kann. Das lagerarmseitige Koppelelement 92a ist als eine axial verschiebbare Platte ausgebildet, in der das Formschlusselement 94a in Form eines Loches eingebracht ist. Das lagerarmseitige Koppelelement 92a ist verschiebbar in dem Lagerarm 48a gelagert. Das lagerarmseitige Koppelelement 92a ist vorzugsweise in einer in die Abstützfläche 60a eingebrachte Vertiefung angebracht. Das lagerarmseitige Koppelelement 92a ist gegen eine Federkraft beweglich gelagert. Das lagerarmseitige Koppelelement 92a ist bewegungstechnisch mit dem Übertragungselement 80a des Schnappmechanismus 76a gekoppelt. Liegt der Tischgrundkörper 28a der Tischeinheit 24a auf der Abstützfläche 60a auf, greift das tischseitige Koppelelement 88a in das lagerarmseitige Koppelelement 92a ein. Vorzugsweise greift das tischseitige Koppelelement 88a erst in das lagerarmseitige Koppelelement 92a ein, wenn der Tischgrundkörper 28a vollständig auf der Abstützfläche 60a aufliegt. Greift das tischseitige Koppelelement 88a erst in das lagerarmseitige Koppelelement 92a ein, ist der Koppelmechanismus 86a in einem gekoppelten Zustand. In einem gekoppelten Zustand greift das tischseitige Koppelelement 88a formschlüssig in das lagerarmseitige Koppelelement 92a ein. In dem gekoppelten Zustand des Koppelmechanismus 86a ist eine Wirkverbindung zwischen dem Betätigungselement 82a und dem Übertragungselement 80a hergestellt. Insbesondere kann in dem gekoppelten Zustand des Koppelmechanismus 86a eine Bewegung des Betätigungselements 82a zu dem Übertragungselement 80a des Schnappmechanismus 76a übertragen werden.

Die Lagervorrichtung 34a weist eine Gebrauchsstellungssicherungseinheit 106a auf. Die Gebrauchsstellungssicherungseinheit 106a ist dazu vorgesehen, die Tischeinheit 24a in der Gebrauchsstellung zu sichern, sofern die Tischeinheit 24a nicht in der Zwischenstellung angeordnet ist. Die Gebrauchsstellungssicherungseinheit 106a ist vorzugsweise zumindest teilweise einstückig mit dem Koppelmechanismus 86a ausgebildet. Das in dem lagerarmseitigen Koppelelement 92a eingebrachte Formschlusselement 94a weist eine Schlüssellochform auf. Das Formschlusselement 94a weist einen Einführbereich auf, der einen Durchmesser aufweist, der größer ist als der Pilzkopf des als Stiftelement ausgebildeten tischseitigen Koppelelements 88a. Das Formschlusselement 94a weist einen Verriegelbereich auf, der einen Durchmesser aufweist, der kleiner ist als der Durchmesser als der Pilzkopf des als Stiftelement ausgebildeten tischseitigen Koppelelements 88a. Der Einführbereich grenzt vorzugsweise direkt an den Verriegelbereich des Formschlusselements 94a an. Ist die Tischeinheit 24a in der Zwischenstellung angeordnet, befindet sich das als Stiftelement mit Pilzkopf ausgebildete Koppelelement 88a in dem Einführbereich des Formschlusselements 94a des Koppelelements 92a. Die Tischeinheit 24a kann über die Rotationslagereinheit 54a aus der Zwischenstellung in die Verstaustellung überführt werden. Ist die Tischeinheit 24a nicht in der Zwischenstellung angeordnet, befindet sich das als Stiftelement mit Pilzkopf ausgebildete Koppelelement 88a in dem Verriegelbereich des Formschlusselements 94a des Koppelelements 92a. Das Koppelelement 88a ist wegen seinem Pilzkopf in Schwenkrichtung der Tischeinheit 24a formschlüssig mit dem Formschlusselement 94a des Koppelelements 92a verbunden und die Tischeinheit 24a kann mittels der Rotationslagereinheit 54a nicht verschwenkt werden. Grundsätzlich ist es auch denkbar, dass die Gebrauchsstellungssicherungseinheit 106a separat von dem Koppelmechanismus 86a ausgebildet ist und weist dazu insbesondere einen eigenen Pin mit Pilzkopf und ein entsprechendes Formschlusselement auf.

Die Tischeinheit 24a umfasst ein Abdeckelement 96a. Das Abdeckelement 96a ist dazu vorgesehen, einen Bereich zwischen der hochgeklappten Tischeinheit 24a und dem Lagerarm 48a, insbesondere der zweiten Seite 52a des Lagerarms 48a in Richtung des Flugzeugsitzes zu verdecken. Durch das Abdeckelement 96a soll insbesondere verhindert werden, dass beim Herunterklappen des Tisches ein Passagier sich die Finger zwischen der Tischeinheit 24a und der Abstützfläche 60a einklemmt. Das Abdeckelement 96a ist beispielsweise als eine Finne ausgebildet, die sich von der Unterseite 90a des Tischgrundkörpers 28a nach unten erstreckt. Das als Finne ausgebildete Abdeckelement 96a erstrecht sich in einem hochgeklappten Zustand der Tischeinheit 24a, insbesondere wenn die Tischeinheit 24a in der Verstaustellung angeordnet ist, von der Unterseite 90a des Tischgrundkörpers 28a bis unter die Kante der Abstützfläche 60a des Lagerarms 48a. Dadurch kann in jeder Stellung der Tischeinheit 24a ein Hineinfassen von vorne zwischen die Tischeinheit 24a und die Abstützfläche 60a verhindert werden. Grundsätzlich ist es auch denkbar, dass das Abdeckelement 96a von einem Textil, einem Teleskopelement, einem Federelement oder einem Faltelement gebildet ist, das fest mit der Unterseite 90a des Tischgrundkörpers 28a und einer Vorderkante des Lagerarms 48a verbunden ist.

Die Tischeinheit 24a umfasst weiter zumindest ein Anschlagelement 98a, das in einem ausgeklappten Zustand der Tischeinheit 24a dazu vorgesehen ist, ein Verschieben der Tischeinheit 24a von einer Gebrauchsstellung in die Zwischenstellung zu verhindern. Das Anschlagselement 98a ist vorzugsweise einstückig mit der Tischeinheit 24a ausgebildet. Das Anschlagselement 98a ist vorzugsweise insbesondere von einer Rückseite des Tischkörpers 30a ausgebildet. Das von der Rückseite des Tischkörpers 30a ausgebildete Anschlagelement 98a schlägt in einem ausgeklappten Zustand der Tischeinheit 24a an eine Seitenwand 20a des Umhausungselements 12a an und verhindert dadurch ein weiteres Verschieben der Tischeinheit 24a in Richtung der Zwischenstellung, wenn die Tischeinheit 24a in ihrem ausgeklappten Zustand ist.

Das Umhausungselement 12a bildet in der oberen Wandung 22a ein Ablagefach aus. Das Ablagefach 108a ist in die Wandung 22a eingebracht und erstreckt sich oberhalb der Einbuchtung 16a. Das Ablagefach 108 weist eine Befüllöffnung 1 auf, die an einer Vorderseite der Wandung 22a angeordnet ist. Die Befüllöffnung 1 ist zwischen dem Monitor 126a und der angeklappten Tischeinheit 24a in der Wandung 22a eingebracht. Durch die Befüllöffnung 1 ist das Ablagefach 108a befüllbar. Das Ablagefach 108a ist insbesondere schräg ausgebildet. Das Ablagefach 108a erstreckt sich vorzugsweise insbesondere parallel zu einer Unterseite der Wandung 22a des Umhausungselements 12a. Das Ablageflach 108a weist an einem hinteren Ende insbesondere einen kleineren Abstand zu der Aufständerebene auf als an einem vorderen Ende, in dem die Befüllöffnung 1 angeordnet ist. Dadurch rutschen Gegenstände, wie beispielsweise Laptops oder Tablets in das Ablagefach 108a hinein und sind dadurch sicher in dem Ablagefach 208a verstaut und können nicht so einfach herausfallen. Grundsätzlich ist es auch denkbar, dass das Ablagefach 108a ein Schließelement, beispielsweise eine Klappe aufweist, mittels dem die Befüllöffnung 1 des Ablagefachs 108a verschlossen werden kann. An einem unteren Ende weist das Ablagefach 108a vorzugsweise einen Entnahmeschlitz 112a auf, durch den insbesondere kleine Gegenstände an einem unteren Ende aus dem Ablagefach 108a herausgenommen werden können, insbesondere wenn die Tischeinheit 24a nicht in der Verstaustellung angeordnet ist. Der Entnahmeschlitz 112a ist in die Unterseite der Wandung 22a eingebracht. Der Entnahmeschlitz 112a mündet in die Einbuchtung 16a des Umhausungselements 12a.

Die Lagervorrichtung 34a umfasst eine Höhenverstelleinheit 114a. Die Höhenverstelleinheit ist dazu vorgesehen, eine Höhe der Tischeinheit in der Gebrauchsstellung, insbesondere in der sitznahen Gebrauchsstellung, zwischen einer Minimalhöhe und einer Maximalhöhe zu verstellen. Mittels der Höhenverstelleinheit 114a kann ein Bediener, insbesondere ein auf dem Flugzeugsitz sitzender Passagier, eine Höhe der Tischeinheit 24a manuell zwischen der Minimalhöhe und der Maximalhöhe verstellen. Dadurch kann ein Passagier die Höhe der Tischeinheit 24a individuell an seine Bedürfnisse anpassen. Zur Ausbildung der Höhenverstelleinheit 114a ist der Lagerarm 48a in einem Teilbereich, vorzugsweise insbesondere auf der zweiten Seite 52a zweiteilig ausgebildet. Ein erstes Armelement 116a ist starr mit der ersten Seite 50a des Lagerarms 48 verbunden. Ein zweites Armelement 118a ist linear, insbesondere in einer Vertikalrichtung, verstellbar mit dem ersten Armelement 116a, das fest mit der ersten Seite verbunden ist, verbunden. Die beiden Armelemente 116a, 118a sind linear verschiebbar miteinander verbunden. Die Höhenverstelleinheit 114a weist zur Verbindung der beiden Armelemente 116a, 118a zwei Linearlager 120a, 122a auf. Die beiden Linearlager 120a, 122a weisen jeweils ein mit dem ersten Armelement verbundenes Führungselement und ein mit dem zweiten Armelement 118a verbundenes Führungselement auf, die formschlüssig ineinandergreifen und entlang einer Verstellrichtung, die insbesondere in einer Vertikalrichtung ausgerichtet ist, zueinander verstellbar sind. Die Tischeinheit 24a ist an dem zweiten Armelement 118a angebunden. Dadurch kann die Tischeinheit 24a mittels der Höhenverstelleinheit 114a durch axiales Verschieben der beiden Armelemente 116a, 118a zueinander in einer Höhe verstellt werden. Die Tischeinheit 24a kann vorzugsweise mittels der Höhenverstelleinheit 114a in unterschiedlichen Höhen arretiert und vorzugsweise insbesondere stufenlos verstellt werden. Die Höhenverstelleinheit 114a umfasst vorzugsweise eine Sicherungseinheit. Die Sicherungseinheit ist dazu vorgesehen, dass die Tischeinheit 24a mittels der Höhenverstelleinheit 114a in ihrer Höhe verstellt werden kann, wenn die Tischeinheit 24a in einer Gebrauchsstellung angeordnet ist. Vorzugsweise ist die Sicherungseinheit dazu vorgesehen, dass die Tischeinheit von einer Gebrauchsstellung nur dann in die Zwischenstellung verschoben werden kann, wenn die Tischeinheit in ihrer Minimalhöhe angeordnet ist. Zur Betätigung der Höhenverstelleinheit 114a weist die Lagervorrichtung 34a ein Betätigungselement 124a auf. Grundsätzlich wäre es auch denkbar, dass das Betätigungselement zur Betätigung der Höhenverstelleinheit 114a einstückig mit dem Betätigungselement 82a der Verriegeleinheit 72a ausgebildet ist oder dass die Höhenverstelleinheit 114a über eine elektrische Verstellung einer Sitzkontrolleinheit möglich ist.

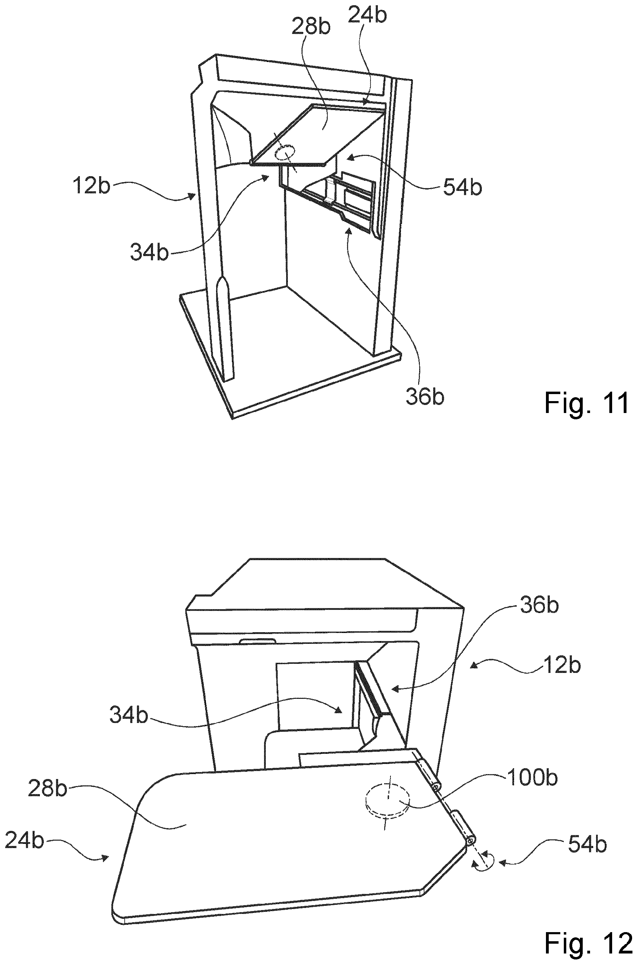

In Fig. 11 und 12 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Fig. 1 bis 10, verwiesen werden kann. Zur Unterscheidung der Ausführungsbeispiele ist der Buchstabe a den Bezugszeichen des Ausführungsbeispiels in Fig. 1 bis 10 nachgestellt. In dem Ausführungsbeispiel der Fig. 11 und 12 ist der Buchstabe a durch den Buchstaben b ersetzt.

Die Figuren 11 und 12 zeigen ein zweites Ausführungsbeispiel der erfindungsgemäßen Flugzeugsitzvorrichtung. Die Flugzeugsitzvorrichtung umfasst ein Umhausungselement 12b. Das Umhausungselement 12b ist Teil des Flugzeugsitzbereichs. Der Flugzeugsitz umfasst eine Tischeinheit 24b. Die Tischeinheit 24b ist an dem Umhausungselement 12b angebunden. Die Tischeinheit 24b ist insbesondere dazu vorgesehen, zumindest in einer Stellung eine Tischoberfläche 26b, also insbesondere eine Ablagefläche für einen auf dem Flugzeugsitz sitzenden Passagier bereit zu stellen. Im Unterschied zu dem ersten Ausführungsbeispiel ist die Tischeinheit 24b nicht zweiteilig ausgebildet. Die Tischeinheit 24b ist von einem einzelnen Tischgrundkörper 28b ausgebildet.

Die Flugzeugsitzvorrichtung umfasst eine Lagervorrichtung 34b, die dazu vorgesehen ist, die Tischeinheit 24b beweglich zu lagern. Die Lagervorrichtung 34b ist dazu vorgesehen, die Tischeinheit 24b relativ zu dem Umhausungselement 14b beweglich zu lagern. Die Lagervorrichtung 34b ist vorzugsweise insbesondere dazu vorgesehen, die Tischeinheit 24b zwischen einer Verstaustellung und einer Gebrauchsstellung zu verstellen. Vorzugsweise ist die Lagervorrichtung 34b dazu vorgesehen, die Tischeinheit 24b in eine zwischen der Verstaustellung und der Gebrauchsstellung liegende Zwischenstellung zu verstellen.

In der Verstaustellung ist die Tischeinheit 24b schräg an dem Umhausungselement 14b angebracht. Die Lagervorrichtung 34b ist dazu vorgesehen, die Tischeinheit 24b in der Verstaustellung schräg an dem Umhausungselement 14b anzubinden. Im Unterschied zu dem ersten Ausführungsbeispiel ist die Tischeinheit 24b in der Verstaustellung um 90 Grad verdreht in dem Umhausungselement 12b angeordnet. Eine Frontseite und eine Rückseite der Tischeinheit 24b sind jeweils den Seitenwänden 18b, 20b der Umhausungseinheit 12b zugewandt. Durch eine entsprechende Lagerung der Tischeinheit 24b kann eine größere Tischeinheit 24b, insbesondere eine breitere, einteilige Tischeinheit 24b realisiert werden.

Zur Verstellung der Tischeinheit 24b weist die Lagervorrichtung 34b zumindest eine Linearlagereinheit 36b auf, die im Wesentlichen der aus dem ersten Ausführungsbeispiel entspricht. Die Lagervorrichtung 34b umfasst einen Lagerarm 48b. Der Lagerarm 48b ist dazu vorgesehen, die Tischeinheit 24b an das Umhausungselement 12b anzubinden. Zur schwenkbaren Anbindung der Tischeinheit 24b weist die Lagervorrichtung 34b eine Rotationslagereinheit 54b auf. Die Rotationslagereinheit 54b ist dazu vorgesehen, die Tischeinheit 24b zwischen der Verstaustellung und wenigstens der im Wesentlichen in Horizontalebene liegenden Zwischenstellung zu verschwenken. Im Unterschied zu dem ersten Ausführungsbeispiel umfasst die Lagervorrichtung 32b eine weitere Rotationslagereinheit 100b. Die weitere Rotationslagereinheit 100b ist dazu vorgesehen, die Tischeinheit 24b in einer Horizontalebene um 90 Grad zu verschwenken. Durch die Rotationslagereinheit 100b kann die Tischeinheit 24b aus der Zwischenstellung um 90 Grad so verschwenkt werden, dass die Frontseite des einstückigen Tischgrundkörpers 28b dem Flugzeugsitz zugewandt ist. Im Unterschied zu den Zeichnungen zu dem ersten Ausführungsbeispiel ist die Tischeinheit 24b und insbesondere auch der Lagerarm 48b vereinfacht dargestellt. Insbesondere eine zweite Seite des Lagerarms 48b ist in den Zeichnungen nicht dargestellt.

## Patentansprüche

1. Flugzeugsitzvorrichtung, mit wenigstens einem Umhausungselement (12a; 12b), wobei das Umhausungselement (12a; 12b) eine einem Flugzeugsitz zugewandte Einbuchtung (16a) ausbildet, die einen Raum ausbildet, in dem ein Ottomane (14a) angeordnet ist, wobei die Einbuchtung (16a) von einer ersten Seitenwand (18a; 18b), einer zweiten Seitenwand (20a; 20b) und einer oberen, schräg ausgebildeten Wandung (22a; 22b) des Umhausungselements (12a; 12b) ausgebildet ist, mit wenigstens einer Tischeinheit (24a; 24b), mit wenigstens einer Lagervorrichtung (34a; 34b), die dazu vorgesehen ist, die wenigstens eine Tischeinheit (24a; 24b) wenigstens in einer Verstaustellung schräg an dem Umhausungselement (12a; 12b) anzubinden, wobei die Tischeinheit (24a; 24b) in der Verstaustellung komplett in dem von dem Umhausungselement (12a; 12b) aufgespannten Raum an der oberen Wandung (22a; 22b), die einen Fußbereich begrenzt, angeordnet ist, wobei die Lagervorrichtung (34a; 34b) wenigstens eine Rotationslagereinheit (54a; 54b) aufweist, die dazu vorgesehen ist, die Tischeinheit (24a; 24b) zwischen der Verstaustellung und wenigstens einer im Wesentlichen in einer Horizontalebene liegenden Zwischenstellung zu verschwenken, wobei die Lagervorrichtung (34a; 34b) zumindest eine Linearlagereinheit (36a; 36b) umfasst, die dazu vorgesehen ist, die Tischeinheit (24a; 24b) zwischen der Zwischenstellung und zumindest einer komplett ausgefahrenen, sitznahen Gebrauchsstellung linear zu verfahren.

2. Flugzeugsitzvorrichtung nach Anspruch 1, **dadurch gekennzeichnet, dass** die Linearlagereinheit (36a; 36b) eine Lagerachse (38a; 38b) ausbildet, die schräg zu einer Aufständerebene ausgerichtet ist.

3. Flugzeugsitzvorrichtung nach Anspruch 1 oder 2, **dadurch gekennzeichnet, dass** die Lagervorrichtung (34a; 34b) wenigstens eine Verriegeleinheit (72a) aufweist, die das Tischelement in der Zwischenstellung verriegelt.

4. Flugzeugsitzvorrichtung nach Anspruch 3, **dadurch gekennzeichnet, dass** die Verriegeleinheit (72a) zumindest ein Betätigungselement (82a) aufweist, mittels der die Verriegeleinheit (72a) entriegelbar ist und das Tischelement (24a; 24b) aus der Zwischenstellung heraus bewegt werden kann.

5. Flugzeugsitzvorrichtung nach Anspruch 3 oder 4, **dadurch gekennzeichnet, dass** die Verriegeleinheit (72a) zumindest eine Sicherungseinheit (84a) aufweist, die ein Entriegeln verhindert bis die Tischeinheit (24a; 24b) vollständig in der Zwischenstellung angeordnet ist.

6. Flugzeugsitzvorrichtung nach einem der vorhergehenden Ansprüche, **dadurch gekennzeichnet, dass** die Tischeinheit (24a) von einem Tischgrundkörper (28a) und zumindest einem dazu in einer Querrichtung schwenkbar angeordneten Tischkörper (30a) ausgebildet ist.

7. Flugzeugsitzvorrichtung nach einem der vorhergehenden Ansprüche, **dadurch gekennzeichnet, dass** die Tischeinheit (24a) zumindest ein Anschlagelement (98a) aufweist, das in einem ausgeklappten Zustand der Tischeinheit (24a) dazu vorgesehen ist, ein Verschieben der Tischeinheit (24a) von einer Gebrauchsstellung in die Zwischenstellung zu verhindern.

8. Flugzeugsitzvorrichtung nach einem der vorhergehenden Ansprüche, **dadurch gekennzeichnet, dass** die Lagervorrichtung (34a) wenigstens ein Verriegelmodul (64a) aufweist, mittels dem die Tischeinheit (24a) in der Verstaustellung an dem Umhausungselement (12a; 12b) gesichert werden kann.

9. Flugzeugsitzvorrichtung nach Anspruch 8, **dadurch gekennzeichnet, dass** das Verriegelmodul (64a) zumindest ein Sicherungselement (66a) aufweist, das zur Sicherung der Tischeinheit (24a; 24b) dazu vorgesehen ist, seitlich in die Tischeinheit (24a; 24b) formschlüssig einzugreifen.

10. Flugzeugsitzvorrichtung nach einem der vorhergehenden Ansprüche, **dadurch gekennzeichnet, dass** die Linearlagereinheit (36a; 36b) wenigstens zwei parallel verlaufende, in einer Seitenwand (18a) des Umhausungselements (12a; 12b) angeordnete Führungsschienen (40a, 42a) aufweist.

11. Flugzeugsitzvorrichtung nach einem der vorhergehenden Ansprüche, **dadurch gekennzeichnet, dass** die Lagervorrichtung (34a, 34b) wenigstens einen Lagerarm (48a) aufweist, der mittels der Linearlagereinheit (36a; 36b) linear verschiebbar ist und an die die Tischeinheit (24a, 24b) über die Rotationslagereinheit (54a; 54b) schwenkbar angebunden ist.

12. Flugzeugsitzvorrichtung nach einem der vorhergehenden Ansprüche, **dadurch gekennzeichnet, dass** die Lagervorrichtung (34a; 34b) eine Gebrauchsstellungssicherungseinheit (106a) aufweist, die dazu vorgesehen ist, die Tischeinheit (24a; 24b) in der Gebrauchsstellung zu sichern, sofern die Tischeinheit (24a; 24b) nicht in der Zwischenstellung angeordnet ist.

13. Flugzeugsitzvorrichtung zumindest nach Anspruch 11, **dadurch gekennzeichnet, dass** der Lagerarm (48a) in einem hinter dem Tisch angeordneten Bereich ein Zusatzelement (62a) ausbildet.

14. Flugzeugsitzvorrichtung zumindest nach Anspruch 11, **dadurch gekennzeichnet, dass** der Lagerarm (48a) zumindest eine Abstützfläche (60a) ausbildet, über die sich die Tischeinheit (24a) in der Gebrauchsstellung zumindest teilweise abstützt.

## Claims

1. Aircraft seat device
with at least one shell element (12a; 12b), wherein the shell element (12a; 12b) forms a hollow (16a) which faces an aircraft seat and forms a space in which an ottoman (14a) is arranged, the hollow (16a) being formed by a first sidewall (18a; 18b), a second sidewall (20a; 20b) and an upper wall (22a; 22b) of the shell element (12a; 12b) that is realized so as to be inclined,
with at least one table unit (24a; 24b),
with at least one support device (34a; 34b) configured to connect the at least one table unit (24a; 24b) obliquely to the shell element (12a; 12b) at least in a stowage position,
wherein in the stowage position the table unit (24a; 24b) is arranged entirely in the space spanned by the shell element (12a; 12b) at the upper wall (22a; 22b) that delimits a foot space,
wherein the support device (34a; 34b) comprises at least one rotational bearing unit (54a; 54b), which is configured for pivoting the table unit (24a; 24b) between the stowage position and at least one intermediate position that is situated substantially in a horizontal plane,
wherein the support device (34a; 34b) comprises at least one linear bearing unit (36a; 36b), which is configured for traversing the table unit (24a; 24b) between the intermediate position and at least one completely deployed usage position that is close to a seat.

2. Aircraft seat device according to claim 1,
**characterized in that** the linear bearing unit (36a; 36b) forms a bearing axis (38a; 38b) that is oriented obliquely with respect to a mounting plane.

3. Aircraft seat device according to claim 1 or 2,
**characterised in that** the support device (34a; 34b) comprises at least one locking unit (72a), which locks the table element in the intermediate position.

4. Aircraft seat device according to claim 3,
**characterized in that** the locking unit (72a) comprises at least one actuation element (82a), by means of which the locking unit (72a) is unlockable and the table element (24a; 24b) is movable out of the intermediate position.

5. Aircraft seat device according to claim 3 or 4,
**characterized in that** the locking unit (72a) comprises at least one safety unit (84a), which prevents an unlocking until the table unit (24a; 24b) is completely arranged in the intermediate position.

6. Aircraft seat device according to one of the preceding claims,
**characterised in that** the table unit (24a) is formed by a table base body (28a) and at least one table body (30a) which is arranged so as to be pivotable in a transversal direction to the table base body (28a).

7. Aircraft seat device according to one of the preceding claims,
**characterised in that** the table unit (24a) comprises at least one abutment element (98a) which is configured, in a deployed state of the table unit (24a), to prevent a displacement of the table unit (24a) from a usage position into the intermediate position.

8. Aircraft seat device according to one of the preceding claims,
**characterised in that** the support device (34a) comprises at least one locking module (64a), by means of which the table unit (24a) can be secured at the shell element (12a; 12b) in the stowage position.

9. Aircraft seat device according to claim 8,
**characterized in that** the locking module (64a) comprises at least one safety element (66a) which is configured, for a securing of the table unit (24a; 24b), to engage into the table unit (24a; 24b) sidewise in a form-fit manner.

10. Aircraft seat device according to one of the preceding claims,
**characterised in that** the linear bearing unit (36a; 36b) comprises at least two guide rails (40a, 42a), which extend in parallel and are arranged in a sidewall (18a) of the shell element (12a; 12b).

11. Aircraft seat device according to one of the preceding claims,
**characterised in that** the support device (34a; 34b) comprises at least one support arm (48a), which is linearly displaceable by means of the linear bearing unit (36a; 36b) and is connected in a pivotable manner to the table unit (24a; 24b) via the rotational bearing unit (54a; 54b).

12. Aircraft seat device according to one of the preceding claims,
**characterised in that** the support device (34a; 34b) comprises a usage position securing unit (106a), which is configured to secure the table unit (24a; 24b) in the usage position unless the table unit (24a; 24b) is arranged in the intermediate position.

13. Aircraft seat device at least according to claim 11,
**characterised in that** the support arm (48a) forms a supplemental element (62a) in a region that is arranged behind the table.

14. Aircraft seat device at least according to claim 11,
**characterised in that** the support arm (48a) forms at least one support surface (60a), via which the table unit (24a) is at least partially supported in the usage position.

## Revendications

1. Dispositif de siège d'avion
avec au moins un élément-enceinte (12a ; 12b), l'élément-enceinte (12a ; 12b) formant une échancrure (16a) qui est tournée vers un siège d'avion et qui forme un espace dans lequel une ottomane (14a) est disposée, l'échancrure (16a) étant formée par une première paroi latérale (18a ; 18b), une deuxième paroi latérale (20a ; 20b) et une paroi supérieure (22a ; 22b) de l'élément-enceinte (12a ; 12b), qui est réalisée en oblique,
avec au moins une unité-table (24a ; 24b),
avec au moins un dispositif de support (34a ; 34b) prévu pour raccorder l'au moins une unité-table (24a ; 24b) - au moins dans une position de rangement - obliquement à l'élément-enceinte (12a ; 12b),
l'unité-table (24a ; 24b) étant disposée - dans la position de rangement - complètement dans l'espace déployé par l'élément-enceinte (12a ; 12b) sur la paroi supérieure (22a ; 22b) qui délimite une zone de pied,
le dispositif de support (34a ; 34b) comprenant au moins une unité de palier rotatif (54a ; 54b) prévue pour pivoter l'unité-table (24a ; 24b) entre la position de rangement et au moins une position intermédiaire située sensiblement dans un plan horizontal,
le dispositif de support (34a ; 34b) comprenant au moins une unité de palier linéaire (36a ; 36b) prévue pour un déplacement linéaire de l'unité-table (24a ; 24b) entre la position intermédiaire et au moins une position d'usage qui est complètement étendue et près du siège.

2. Dispositif de siège d'avion selon la revendication 1,
**caractérisé en ce que** l'unité de palier linéaire (36a ; 36b) forme un arbre de palier (38a ; 38b) orienté obliquement par rapport à un plan de montage.

3. Dispositif de siège d'avion selon la revendication 1 ou 2,
**caractérisé en ce que** le dispositif de support (34a ; 34b) comprend au moins une unité à verrouillage (72a) qui verrouille l'élément-table dans la position intermédiaire.

4. Dispositif de siège d'avion selon la revendication 3,
**caractérisé en ce que** l'unité à verrouillage (72a) comprend au moins un élément actionneur (82a), par le biais duquel l'unité à verrouillage (72a) peut être déverrouillée et l'élément-table (24a ; 24b) peut être mu hors de la position intermédiaire.

5. Dispositif de siège d'avion selon la revendication 3 ou 4,
**caractérisé en ce que** l'unité à verrouillage (72a) comprend au moins une unité de sécurisation (84a) qui empêche un déverrouillage jusqu'à ce que l'unité-table (24a ; 24b) soit disposée complètement dans la position intermédiaire.

6. Dispositif de siège d'avion selon l'une des revendications précédentes,
**caractérisé en ce que** l'unité-table (24a) est formée d'un corps de base de table (28a) et d'au moins un corps de table (30a) disposé à être pivotable dans une direction transversale par rapport au corps de base de table (28a)..

7. Dispositif de siège d'avion selon l'une des revendications précédentes,
**caractérisé en ce que** l'unité-table (24a) comprend au moins un élément de butée (98a) qui est prévu, dans un état ou l'unité-table (24a) est déployée, pour empêcher un déplacement de l'unité-table (24a) d'une position d'usage dans la position intermédiaire.

8. Dispositif de siège d'avion selon l'une des revendications précédentes,
**caractérisé en ce que** le dispositif de support (34a) comprend au moins un module à verrouillage (64a), par le biais duquel l'unité-table (24a) peut être sécurisée dans la position de rangement à l'élément-enceinte (12a ; 12b).

9. Dispositif de siège d'avion selon la revendication 8,
**caractérisé en ce que** le module à verrouillage (64a) comprend au moins un élément de sécurisation (66a) qui est prévu, pour la sécurisation de l'unité-table (24a ; 24b), à engrener latéralement dans l'unité-table (24a ; 24b) par liaison de forme.

10. Dispositif de siège d'avion selon l'une des revendications précédentes,
**caractérisé en ce que** l'unité de palier linéaire (36a ; 36b) comprend au moins deux rails de guidage (40a, 42a) s'étendant en parallèle et disposées dans une paroi latérale (18a) de l'élément-enceinte (12a ; 12b).

11. Dispositif de siège d'avion selon l'une des revendications précédentes,
**caractérisé en ce que** le dispositif de support (34a ; 34b) comprend au moins un bras de palier (48a) qui est déplaçable linéairement par l'unité de palier linéaire (36a ; 36b) et auquel l'unité-table (24a ; 24b) est raccordée pivotablement par l'unité de palier rotatif (54a ; 54b).

12. Dispositif de siège d'avion selon l'une des revendications précédentes,
**caractérisé en ce que** le dispositif de support (34a ; 34b) comprend une unité de sécurisation de position d'usage (106a) qui est prévue pour sécuriser l'unité-table (24a ; 24b) dans la position d'usage pourvu que l'unité-table (24a ; 24b) ne soit pas disposée dans la position intermédiaire.

13. Dispositif de siège d'avion au moins selon la revendication 11,
**caractérisé en ce que** le bras de palier (48a) forme un élément additif dans une zone disposée à l'arrière de la table.

14. Dispositif de siège d'avion au moins selon la revendication 11,
**caractérisé en ce que** le bras de palier (48a) forme au moins une surface de support (60a) par laquelle l'unité-table (24a) est au moins partiellement supportée dans la position d'usage.
